# EUROPEAN PATENT APPLICATION

(11) **EP 4 686 171 A1**
(43) Date of publication of application: **28.01.2026**
(21) Application number: 25191593.0
(22) Date of filing: 24.07.2025
(51) Int. Cl.: H04L 65/403, H04L 65/80, H04N 21/422, H04N 21/4788

(54) **SYSTEMS FOR AND METHODS FOR AUDIO LATENCY MEASUREMENT**

(30) Priority: 26.07.2024 US 202418786070
(71) Applicant: Avago Technologies International Sales Pte. Limited, Singapore 768923 (SG)
(72) Inventor: Mamidwar, Rajesh Shankarrao, Irvine, 92618 (US); Imudianda, Kavitha Ganapathy, Irvine, 92618 (US)
(74) Representative: Dilg, Haeusler, Schindelmann Patentanwaltsgesellschaft mbH

(57) **Abstract**

Audio latency measurement is provided. A device is configured to play, via a speaker (340), an audio wave in storage accessible by the device. The device is configured to detect the played audio wave by a microphone (344), the device to identify a time of detection of the audio wave. The device is configured to play, via the speaker (340), the played audio wave received by the microphone (344). The device is configured to detect the second played audio wave as being received by the microphone (344), the device to identify a second detection of the audio wave. The device is configured to determine a latency of communications of the device based on a difference between the first detection of the played audio wave and the second detection of the second played audio wave. The device is configured to communicate the latency to one of a second device or a user interface (310, 332).

## Description

### Field of the Disclosure

This disclosure generally relates to systems and methods for communication between network devices, such as between a Bluetooth peripheral device in communication with an upstream server.

### Background of the Disclosure

In the last few decades, the market for wireless communications devices has grown by orders of magnitude, fueled by the use of portable devices, and increased connectivity and data communication between all manners of devices. Digital switching techniques have facilitated the large-scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wired and wireless communications can operate in accordance with various standards such as IEEE 802.11x, Bluetooth, global system for mobile communications (GSM), and code division multiple access (CDMA). However, continued updates to specifications or configurations can lead to various instances of devices which may be available on a network. For example, a headset can operate with various protocols (e.g., revisions), operational modes thereof, or other configuration settings. Communications latency of such a device can vary according to its own configuration or configurations of other devices of a network.

### Summary

Low latency usages like video conference are evolving, but are sometimes challenged by a lack of measurements for end-to-end audio latency. For example, users may terminate a call upon perceiving bothersome latency, and call in again, hoping for a lower latency connection. However, various microphone-having devices including over the top (OTT) devices like set top boxes (STB) can identify actual speaker-to-speaker audio latency between devices. An audio output of a device can play a predetermined audio wave (e.g., audio file), such as a sine-wave or other identifiable sound (e.g., a finger snap sound), and record data played from speaker as received by a microphone (with any echo cancellation disabled). Accordingly, audio delay from the output device (e.g., OTT device) to speakers and onward to the microphone is measured. Audio can be routed to various outputs, such as a television, external home theater systems, or Bluetooth speakers, each of which may have unique characteristics based on a particular user configuration.

Home specific latencies can be fed to an application which can use the received latencies to adjust end-to-end latency, such as to align audio and video for lip-sync or other purposes. Applications running on some over the top (OTT) devices can dynamically adjust their end-to-end latency requirements in real time. In the case of a video conference, end to end delay can be measured by sending the audio wave from one devices speaker to the same devices microphone, and then onward to another device, and measuring a latency associated with feedback of the audio wave from the other device to capture end-to-end audio delay in real time.

Characterizing the latency of a system can aid in system operations, such as to synchronize audio data with video data, as in the case of a teleconference or video game. The display of a latency may aid a user to select a low-latency device for latency sensitive information. For example, presenting an indication that one Bluetooth headset exhibits lower latency than another (e.g., corresponding to a supported protocol of 5.2 for one headset and 4.0 for another) can aid the user to select the lower latency headset.

According to systems and methods of the present disclosure, a device can play an audio wave, via a speaker, and detect a receipt of the audio wave at a microphone. For example, the microphone can receive a direct output (e.g., pressure wave) from a speaker, or the audio wave can traverse various locations, as in the case of a teleconference having any number of network-connected devices (e.g., each of which can include at least one microphone and speaker). Upon the receipt of the audio wave, the device can record a first detection time, and replay the received audio wave. Upon a receipt of the replayed audio wave, the device can record a second detection time. The device can determine a propagation latency based on a difference between the first and second detection times. The propagation latency may vary according to a device mode or configuration, processor loading, selected communications protocols, relative positions of devices, and so forth. For example, various headsets, speakers, or microphones may operate according to various instances of protocols, configuration settings, or the like. For example, a Bluetooth, Wi-Fi, HDMI, or other device may be associated with different latencies. Likewise, various Bluetooth, Wi-Fi, or other devices may themselves include variation of versions (e.g., Bluetooth 2.0, 3.0, 4.0), drivers, applications, and so forth. Further, each protocol can operate according to any of various operational modes (e.g., a Bluetooth device can operate according to an advanced audio distribution profile (A2DP) headset profile (HSP) or hands-free profile (HFP).

Various embodiments disclosed herein are related to a method. The method or various operations thereof may be performed by a device having (e.g., including or interfacing with) a speaker and a microphone. The method can include playing, via a speaker of the device, an audio wave stored in storage accessible by the device. The method can include detecting the played audio wave as being received by a microphone of the device, the device identifying a first time of the played audio wave being detected. The method can include playing, via the speaker, the played audio wave received by the microphone. The method can include detecting the second played audio wave as being received by the microphone, the device identifying a second time of the second played audio wave being detected. The method can include determining a latency of communications of the device based at least on a difference between the first time of the played audio wave being detected and the second time of the second played audio wave being detected. The method can include communicating the latency to one of a second device or a user interface.

In some embodiments, the device is a set top box. In some embodiments, the audio wave includes a sine-wave of a specific length of time with a specific pattern. In some embodiments, the method includes detecting at least a portion of the played audio wave received by the microphone of the device.

In some embodiments, the method includes identifying the first time of the played audio wave based on at least the portion of the played audio wave received by the microphone of the device being detected. In some embodiments, the method includes detecting at least a portion of the second played audio wave received by the microphone of the device. In some embodiments, the method includes identifying the second time of the played audio wave at the second time of the at least the portion of the played audio wave received by the microphone of the device being detected. In some embodiments, the method includes identifying a configuration of the device and associating the determined latency with the configuration. In some embodiments, the method includes disabling echo cancellation at least prior to playing the audio wave.

Various embodiments disclosed herein are related to a device configured to execute the method. For example, the device can include one or more processors configured to execute instructions to cause the execution of the method. For example, some embodiments of the present disclosure are related to a device configured to play, via a speaker of the device, an audio wave stored in storage accessible by the device. The device can detect the played audio wave as being received by a microphone of the device, the device identifying a first time of the played audio wave being detected. The device can play, via the speaker, the played audio wave received by the microphone. The device can detect the second played audio wave as being received by the microphone, the device identifying a second time of the second played audio wave being detected. The device can determine, a latency of communications of the device based at least on a difference between the first time of the played audio wave being detected and the second time of the second played audio wave being detected. The device can communicate the latency to one of a second device or a user interface. A same or further devices of the present disclosure can execute further of the methods provided herein (and likewise, the present disclosure contemplates methods as may be performed by the devices disclosed herein according to the present disclosure). In some embodiments, a method may be performed by two or more devices.

In some embodiments, the device is a set top box. In some embodiments, the device is configurated to insert a delay between playing the audio wave and playing the played audio wave. The device can insert the delay responsive to or based on the audio wave including a sine-wave of a specific length of time with a specific pattern, the latency exceeding the specific length of time, or the determination of the latency comprises reducing a detected latency by a period of the delay. In some embodiments, the device is configured to detect at least a portion of the played audio wave received by the microphone of the device. In some embodiments, the device is configured to identify the first time of the played audio wave based on at least the portion of the played audio wave received by the microphone of the device being detected. In some embodiments, the device is configured to detect at least a portion of the second played audio wave received by the microphone of the device. In some embodiments, the device is configured to identify the second time of the played audio wave at the second time of the at least the portion of the played audio wave received by the microphone of the device being detected. In some embodiments, the device is configured to identify a configuration of the device and associate the determined latency with the configuration. In some embodiments, the device is configured to disable echo cancellation at least prior to playing the audio wave.

Various embodiments disclosed herein are related to another method. The method or various operations thereof may be performed by a first device having (e.g., including or interfacing with) a speaker and a microphone. For example, the first device can communicate with a second device also having a speaker and a microphone. In some instances, the second device can perform one or more operations of the method. Further contemplated according to the present disclosure, are either of the first device of the second device. That is, embodiments of the present disclosure include a first device configured to interface with the second device or the second device configured to interface with the first device. Further, the present disclosure contemplates systems including the first and second devices, along with various peripheral or related components as are provided herein.

The method includes providing, by the first device, a video conference with a second device. The method includes communicating, by the first device, an audio wave as part of the video conference, the audio wave being played via a first speaker of the first device. The method includes identifying, by the first device, a first time of the played audio wave being detected by the first device as being received by a microphone of the first device. The method includes detecting, by the first device, the audio wave being played during the video conference via a second speaker of the second device and received by the microphone of the first device. The method includes identifying, by the first device, a second time of the audio wave being detected by the first device and received by the microphone of the first device. The method includes determining, by the first device, a latency of communications between the first device and the second device based at least on a difference of the first time of the audio wave being detected and the second time of the audio wave being detected. The method includes communicating, by the first device, the latency to one of the second device or a user interface of the first device.

In some embodiments, the method includes playing, by the second device via the second speaker, the audio wave received from the first device during the video conference. In some embodiments, the audio wave includes a sine-wave of a specific length of time with a specific pattern. In some embodiments, the method includes detecting, by the first device, at least a portion of the audio wave received by the microphone of the first device from the first speaker of the first device and the second speaker of the second device. In some embodiments, the method includes identifying, by the first device, the first time and the second time of the received audio wave based on at least the portion of the audio wave received by the first device being detected. In some embodiments, the method includes identifying, by the first device, a configuration of one of the first device or the second device and associating the latency with the configuration.

Various embodiments disclosed herein are related to a system. The system includes one or more processors of a first device. The one or more processors are configured to output, to a first speaker of the first device, an audio wave stored retrieved from a storage location. The one or more processors are configured to identify a first time of the audio wave being received by a microphone of the first device and detected by the first device. The one or more processors are configured to identify a second time of the audio wave being received by the microphone of the first device and detected by the first device, the audio wave being outputted a second time by the first device to the first speaker, or by a second device to a second speaker. The one or more processors are configured to determine a latency of communications from at least the first device based at least on a difference of the first time of the audio wave being identified and the second time of the audio wave being identified. The one or more processors are configured to communicate the latency to one of the second device or a user interface.

In some embodiments, the one or more processors are also configured to provide a video conference with the second device and output the audio wave during the video conference. In some embodiments, the one or more processors are also configured to determine the latency of communications between the first device and the second device based at least on the difference between the first time and the second time. In some embodiments, the audio wave includes a sine-wave of a specific length of time with a specific pattern. In some embodiments, the one or more processors are also configured to determine a configuration of at least the first device and associate the configuration with the determined latency.

### Brief Description of the Drawings

Various objects, aspects, features, and advantages of the disclosure will become more apparent and better understood by referring to the detailed description taken in conjunction with the accompanying drawings, in which reference characters identify corresponding elements throughout. In the drawings, like reference numbers generally indicate identical, functionally similar, and/or structurally similar elements.
FIG. 1A is a general schematic block diagram of a communication system according to some embodiments;
FIG. 1B is a general schematic block diagram of portion of the communication system illustrated in FIG. 1A according to some embodiments;
FIG. 1C is a general schematic block diagram of applications in communication with cloud infrastructure for the communication system illustrated in FIG. 1A according to some embodiments;
FIG. 1D is a general schematic block diagram of an application for a communication system illustrated in FIG. 1A according to some embodiments;
FIG. 1E is a general schematic block diagram of an application for a communication system illustrated in FIG. 1A according to some embodiments;
FIG. 1F is a schematic block diagram of the communication system illustrated in FIG. 1A including a server configured for augmented reality/virtual reality and/or metaverse applications according to some embodiments;
FIG. 2A is a block diagram of embodiments of a computing device; and
FIG. 2B is a block diagram depicting a computing environment comprising client device in communication with cloud service providers;
FIG. 3 is a network diagram for a system to measure audio latency between devices, according to some embodiments;
FIG. 4 is a network diagram for a system to measure audio latency of a device on a network, according to some embodiments;
FIG. 5 is a network diagram of a system to measure audio latency between devices of different networks, according to some embodiments;
FIG. 6 is a flow diagram for a method 600 for measuring audio latency, according to some embodiments; and

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.11^{™}, IEEE 802.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

Devices provided by ISPs and customer-owned AR/VR setups, mobile phones, OTT devices, and cloud gaming clients are configured for low latency uses in some embodiments. Some embodiments of systems and methods disclosed herein provide a real time or near real time system to monitor end to end latencies. In some applications, timestamp synchronization with applications at intermediate nodes and end devices use precision time protocol (PTP) synchronization protocols for latency monitoring. In some embodiments, latency is monitored from end-to-end so that latency of all devices within the entire end-to-end process is considered, thereby enabling identification of the origins of substantial latency.

In some embodiments, the systems and methods achieve synchronization of the wall clock across all nodes and end-user devices by employing timestamps for low latency data packets at each node. The determination of latency at each node is made by applications at each node. The determination of latency is reported back to a server that communicates with the applications. The systems and methods allow the communication system to distinguish whether latency arises from the home network, an ISP, or cloud servers.

A latency application server extension is integrated into the ISP-provided modem or router in some embodiments. In some embodiments, the server extensions have the ability to filter and transmit all necessary information to the ISP's cloud server or share open data with application developers. The server extension can store or receive information about a customer's low latency plan subscription and can track low latency usages inside the home in some embodiments.

A server extension can refer to a software component or module that extends the functionality of a server application (e.g., a latency application) in some embodiments. Server extensions can be used in various server environments such as web servers, application servers, ISP servers, and database servers to enhance their capabilities or to add specific features tailored to the needs of users or applications and can be installed using extension files. The extensions can be installed on any of the devices discussed herein. In some embodiments, the extensions are provided on an ISP controlled server in the cloud, an ISP controlled modem or access point, a third party Wi-Fi access point, a third party modem, or ISP provided low latency devices.

In some embodiments, the server extension allows a user to select device applications for different latency treatment. A server within the residence can use classifiers and queues to reduce latency for low latency devices. The server can be part of a router, set top box, hub, etc. in some embodiments. The server extensions support multiparty involvement (e.g., cloud managers, ISPs, application developers and silicon vendors) for end to end usages in some embodiments.

With respect to latency, generally, latency refers to an amount of time a system, application or device takes to process and respond to a request in some embodiments. With respect to low latency, low latency refers to such amount of time being within a threshold, a performance level, a user experience level or requirements of the application or usage in some embodiments. The threshold, performance level, user experience level or requirements of the application may vary based on context, such as a type of application and/or use case and the systems, networks, and computer environment for which such use cases and/or application operate or execute. Low latency from a perspective of a computing environment refers to an ability of a computing system or network to provide responses without unacceptable or unsuitable delay, or otherwise minimal delay, for the context or use case of which such responses are provided. System criteria and application parameters can affect a threshold for low latency. The threshold can be fixed or variable (e.g., depending upon conditions or actual needs or requirements at a particular time). With respect to low latency networks and systems in a context of network and network communication, low latency describes a computer network, systems and environment that is designed, configured and/or implemented to support applications, network traffic and processing operations to reduce, improve latency or to meet a low latency threshold. End-to-end latency refers to latency between two points in a network or communication system. The two points can be a source of data and a consumer of data, or intermediate points therebetween in some embodiments.

A low latency device refers to any hardware, device component, or system that has low latency considerations or requirements in some embodiments. A low latency device can be a telecommunications, remote control systems, gaming, audio processing, financial trading, augmented reality and/or virtual reality device where delays can impact user experience or system performance. There may be levels of low latency requirements where one low latency device has a more stringent requirement than another low latency device in some embodiments. A low latency path refers to a path for low latency operation in some embodiments. Latency data refers to any indication of latency associated with a communication or configuration data for low latency operation or control in some embodiments. A low latency application refers to the use or performance of a low latency operation in some embodiments. A low latency device or software program can be used to perform the low latency operation (video conferencing, cloud gaming, augmented reality/virtual reality (AR/VR) applications, and metaverse applications).

Some embodiments relate to a system including a first device and an application. The application operates on the first device and is configured to append time stamps to a first packet received by the first device. The time stamps indicate a first time the first packet is received by the first device and a second time the first packet is sent by the first device. Append refers to adding or attaching information to a data structure (e.g., a packet) in some embodiments.

In some embodiments, the application is configured to determine latency information associated with communication through the first device using the time stamps. The time stamps include a first time stamp for the first time and a second time stamp for the second time. In some embodiments, the application is configured to provide a second packet including the latency information and communicate the second packet to a server remote from the first device via a virtual communication link. In some embodiments, the first time stamp is an ingress time stamp and the second time stamp is an egress time stamp.

In some embodiments, the time stamps are provided as part of a precision time protocol. In some embodiments, the first packet is for use in a low latency operation. In some embodiments, the time stamps are derived from a satellite time source. In some embodiments, the latency information includes a history of time stamps. In some embodiments, the first device is a user device, cloud infrastructure, internet service provider infrastructure, a set top box, a cable modem, or a wireless router.

Some embodiments relate to a non-transitory computer readable medium having instructions stored thereon that, when executed by a processor, cause a processor to receive a first packet from a first node. The first packet includes latency information associated with a second packet provided to the first node for a low latency application. The instructions also cause the processor to provide a third packet to the first node or other nodes to increase priority for packets for the low latency application if the latency information indicates that a latency threshold for the low latency application has not been met. The first node can be part of a communication system including a cable, fiber optic, or wireless network. The other nodes and the first node are in path associated with the second packet provided to the first node for the low latency application.

In some embodiments, the processor is disposed on a server remote from the first node. In some embodiments, the server is in communication with internet service provider infrastructure and the third packet is provided to the internet service provider infrastructure. In some embodiments, the third packet is provided to internet service provider infrastructure, a set top box, a cable modem, or a wireless router.

In some embodiments, the instructions cause the processor to provide a fourth packet to the first node or the other nodes to decrease priority for packets for the low latency application if the latency information indicates that the latency threshold for the low latency application has been met and additional bandwidth is available.

In some embodiments, the latency information comprises a user identification.

Some embodiments relate to a method of providing low latency service. The method includes providing a first time stamp for a first packet provided to a first device. The first packet can be for reception by a low latency device or as being for use in a low latency operation. The method also includes providing a second packet including latency information to a server remote from the first device via a virtual communication link.

In some embodiments, the method also includes providing a second time stamp for the first packet provided to the first device. In some embodiments, the first time stamp is an ingress time stamp and the second time stamp is an egress time stamp. In some embodiments, the first device includes an application configured to append the first time stamp to the first packet.

Some embodiments relate to a server. The server includes a first application configured to monitor end-to-end latency for a network. The network includes devices. The application is configured to receive latency information from at least one of the devices. The latency information includes time stamps or time period data for a packet to communicated across a device or a link. Monitoring or monitor refers to an action where performance is observed, checked, and/or recorded and can generally occur over a period of time.

A non-transitory computer readable medium have instructions stored thereon that, when executed by a processor, cause the processor to receive a first packet from a first node. The first packet includes latency information associated with a second packet provided to the first node for a low latency application. The instructions also cause the processor to provide a subscription offer in response to the latency information. The first node is part of a communication system comprising a cable, fiber optic, or wireless network. The other nodes and the first node are in path associated with the second packet provided to the first node for the low latency application.

In some embodiments, the first device is a set top box, a cable modem, or a wireless router. A device can refer to any apparatus, system, or component for performing an operation in some embodiments. A low latency device can refer to any device capable of performing a low latency operation. A low latency operation refers to an operation where higher than low latency operation can affect performance level, user experience level or a requirement of the application or use in some embodiments. A packet refers to a unit of data that is transmitted over a network in some embodiments. The packet can include a header and a payload. Time stamps and latency information can be appended to a packet in some embodiments. Classify or classifying may refer to any operation for determining a classification, grouping or arrangement in some embodiments. For example, a packet can be classified as being for a low latency device or application by reviewing an address, appended data, by its type of data, or other information in some embodiments. Bandwidth may refer to an amount of capacity for communication in some embodiments. Priority refers to a precedence, hierarchical order, level, or other classification in some embodiments. For example, packets can be ordered for transmission in accordance with a priority associated with a latency requirement in some embodiments. A cable, fiber optic, or wireless network refers to any network that uses one or more of a fiber optic cable, a coaxial cable, an ethernet cable, other wire, or wireless medium in some embodiments.

For purposes of reading the description of the various embodiments below, the following descriptions of the sections of the specification and their respective contents may be helpful:
- Section A describes a communication system that may be useful for practicing the embodiments described herein.
- Section B describes low latency applications that may be useful for practicing the embodiments described herein.
- Section C describes embodiments of network environments and computing environments that may be useful for practicing the embodiments described herein.
- Section D describes embodiments of systems and methods of audio latency measurement.

### A. Communication System

Network latency can significantly impact internet connectivity, user experience, and the performance of various online applications and services. Some embodiments provide information for ISPs to address end-to-end latency issues through network optimization, infrastructure upgrades, and efficient routing to ensure a reliable and responsive internet experience for their customers. In some embodiments, tools are provided so that cloud servers of ISPs can collect analytics data and can re-configure ISP provided devices like cable modems, GPON modems or set top boxes. In some embodiments, the systems and methods allow multiple parties (e.g., more than one ISP, cloud service providers, public switch operators, and application developers) to address low latency usages including but not limited to video conferencing, augmented reality (AR)/ virtual reality (VR), and metaverse end to end usage. In some embodiments, the systems and methods allow multiple parties to cooperate and work together to address latency issues. In some embodiments, the systems and methods can be used with Wi-Fi networks, Ethernet networks, modems, access network, backbone networks, IXPs, and cloud infrastructure and allow multiple teams to work together for latency optimizations across various mediums.

In some embodiments, a latency monitor measures and reports latency for each link, device, and end application. The reports are provided to controllers of the paths, such as, ISPs, application developers, end users, etc. so that actions can be taken once low latency requirements are not met. In some embodiments, systems and methods provide a seamless latency monitoring, analysis, and optimization. The analysis of latency measurements and reporting allows for identification of latency contributors in real time and optimization by mapping traffic requiring low latency traffic to low latency queues or paths. In some embodiments, devices in the path are provided with an application (e.g., software) for effecting monitoring, analysis, and optimization. The analysis of latency measurements and reporting allows for control of devices to appropriately provide low latency traffic to low latency queues or paths. The applications can be in communication with a latency server (e.g., a server for the applications) that coordinates operations and accumulates data according to the monitoring, analysis, and optimization operations. An application or app may refer to a software program or module configured to perform specific functions or tasks on an electronic device.

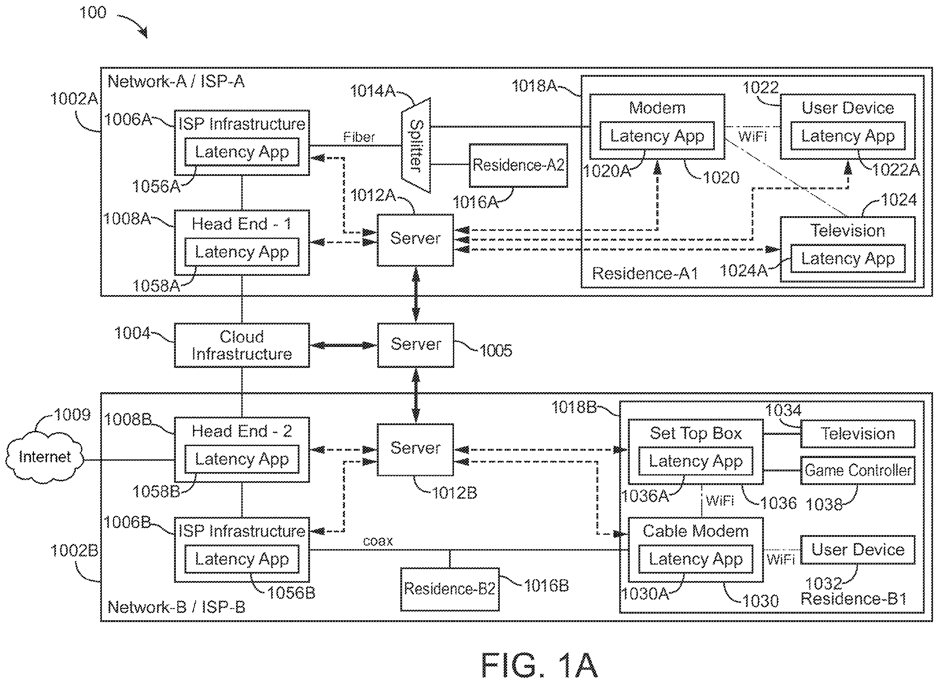

With reference FIG. 1A a communication system 100 includes a network 1002A for residences 1016A and 1018A, a network 1002B for residences 1016B and 1018B, a cloud infrastructure 1004, and a BQUICK_TOP server 1005. Communication system 100 advantageously is configured so that information is provided to ISPs to address latency issues through network optimization, infrastructure upgrades, service upgrades and/or efficient routing to ensure a reliable and responsive internet experience for customers can be achieved on networks 1002A and 1002B. BQUICK_TOP server 1005 is configured to receive the information and address latency issues in some embodiments. BQUICK_TOP server 1005 is in communication (e.g., via direct or virtual connections) with cloud infrastructure 1004 and networks 1002A and B (residences 1016A-B and 1018A-B) to share information, reports, commands, and other data in some embodiments. BQUICK_TOP server 1005, infrastructure 1004 and residences 1016A-B and 1018A-B can utilize any form of communication mediums, networks, protocols, etc. to communicate data and information.

Cloud infrastructure 1004 includes a collection of hardware, software, networking, and other resources that enable the delivery of cloud computing services over the internet in some embodiments. Cloud infrastructure 1004 includes physical servers, storage devices, networking equipment, and other hardware components hosted in data centers distributed across multiple geographic locations in some embodiments. The data centers are equipped with high-performance servers, storage arrays, and networking gear to support the computing needs of cloud services in some embodiments. The cloud infrastructure 1004 is configured to provide high-speed, redundant network links, routers, switches, and content delivery networks (CDNs) for delivery of low-latency, high-bandwidth content for users in some embodiments. Cloud infrastructure 1004 includes block storage (e.g., Amazon EBS, Azure Disk Storage), object storage (e.g., Amazon S3, Google Cloud Storage), and file storage (e.g., Amazon EFS, Azure Files) in some embodiments.

Residences 1016A and 1018A can include a network associated with a first ISP and residences 1016B and 1018B can include a network associate with the same ISP or a second ISP. In some embodiments, the networks for residences 1016A and 1018A and residences 1016B and 1018B are part of broadband access server (BAS) networks. Network 1002A includes infrastructure 1006A, a head end 1008A, a BQUICK ISP_A server 1012A, splitter 1014A, equipment for residence 1016A and equipment for residence 1018A. Equipment for residence 1018A includes an optical network unit (ONU) 1020, a user device 1022, and a television 1024. Modem or optical network unit 1020 can be a fiber optic router, switch, gateway etc. and have Wi-Fi capabilities for a Wi-Fi network associated with residence 1018A in some embodiments. Optical network unit 1020 is a GPON modem or optical network terminal (ONT) in some embodiments. GPON is a technology that allows for high-speed internet access over fiber optic cables. Optical network unit 1020 converts the optical signals transmitted over the fiber optic cables into electrical signals and/or radio frequency signals that can be used by devices in residence 1018A. Although system 100 is shown communicating via coaxial cable and optical cable, ground based wireless communications and satellite communications can be utilized in system 100. Optical network unit 1020 is generally provided by an optical network operator (ISP-A) and can be referred to as an optical network termination. BQUICK_TOP server 1005 and BQUICK ISP_A server 1012A can be Broadcom Analytics System (BAS Servers) that collect analytics data from various devices like modems, set top boxes, and other devices.

User device 1022 is a smart phone, AR/VR device, tablet, lap top computer, smart watch, exercise equipment, smart appliance, camera, headphone, automobile, another computing device, etc. Residence 1016A can have similar devices to residence 1018A. Television 1024 and user device 1022 communicate with optical network unit 1020 via a wireless network or wired connections. In some embodiments, optical network unit 1020 can include an ethernet router including wired connections to user device 1022, wireless modems, and television 1024.

Head end 1008A includes routers, switches, servers, and/or other infrastructure for communicating between ISP infrastructure 1006A and cloud infrastructure 1004. ISP infrastructure 1006A includes routers, switches, servers, and/or other infrastructure for communicating between head end 1008A and splitter 1014A. Splitter 1014A communicates via fiber optic cables between infrastructure 1006A and residences 1016A and 1018A., BQUICK ISP_A 1012A BQUICK_TOP server 1005 communicates with server 1012, infrastructure 1006A, head end 1008A and residences 1016A and 1018A via direct or indirect communication (e.g., via the Internet).

Splitter 1014A is a fiber optic splitter in some embodiments. Splitter 1014A can be used in fiber optic networks to divide an incoming optical signal into multiple separate signals for residences 1016A and 1018A and unify signals into one or more signals for infrastructure 1006A. Splitter 1014A can be configured for a passive optical network (PON) architecture. Bidirectional communication occurs across splitter 1014A in some embodiments. In some embodiments, splitter 114 is a conducting cable-type splitter (e.g., for a coaxial, not optical cable). Splitter 114 includes repeaters, amplifiers, signal conditioners, etc. in some embodiments.

BQUICK ISP_A server 1012A a computing device, such as a machine equipped with one or more processors, memory, and storage drives. BQUICK ISP_A server 1012A delivers assorted services to customers (e.g., residences 1016A and 1018A) for the ISP in some embodiments. BQUICK_TOP server 1005 is configured as a central hub responsible for managing and routing internet traffic for its subscribers. BQUICK ISP_A server 1012A handles requests from users such as accessing websites, sending emails, streaming content, and downloading files. BQUICK ISP_A server 1012A manages network protocols, assigns IP addresses, and facilitates communication between different devices on the internet. BQUICK ISP_A server 1012A includes operating systems like Linux or Windows Server, along with networking software such as routing protocols (e.g., BGP, OSPF), DNS (Domain Name System) servers, dynamic host configuration protocol (DHCP) servers for IP address allocation, and firewall/ security software to protect system 100 from cyber threats. BQUICK ISP_A server 1012A employs traffic shaping and quality of service (QoS) mechanisms to prioritize and optimize internet traffic, ensuring a smooth and consistent user experience for all subscribers. These operations can involve managing bandwidth allocation, prioritizing certain types of traffic (e.g., VoIP or video streaming), and mitigating network congestion during peak usage periods and can be performed in response to information from server 1012. BQUICK ISP_A server 1012A employs monitoring tools or applications to continuously analyze traffic data to detect anomalies, troubleshoot network issues, and ensure compliance with service level agreements (SLAs) and regulatory requirements in some embodiments.

BQUICK_TOP server 1005 is a computing device similar to and is configured to communicate with servers 1012A and 1012B. BQUICK_TOP server 1005 includes software advantageously configured to address latency issues through network optimization, infrastructure upgrades, and efficient routing to ensure a reliable and responsive internet experience for their customers in some embodiments. BQUICK_TOP server 1005 can receive logs of network activity, including but not limited to traffic patterns, usage statistics, and security events from servers 1012A and 1012B in some embodiments. BQUICK_TOP server 1005 employs monitoring tools to continuously analyze traffic data to detect anomalies, troubleshoot network issues, and ensure compliance with service level agreements (SLAs) and regulatory requirements in some embodiments. In some embodiments, BQUICK_TOP server 1005 is a platform configured to perform latency monitoring in real time, latency analysis in real time, and latency optimization in real time. In some embodiments, the latency optimization is performed to provide a report indicating latency issues. BQUICK_TOP server 1005 can configure paths in networks 1002A and 1002B and controls devices in networks 1002A and 1002B so that low latency requirements are met in some embodiments.

BQUICK_TOP server 1005 and BQUICK ISP_B server 1012B are similar to BQUICK ISP_A server 1012A and is configured for operation with residences 1016B and 1018B. Residences 1016A, 1018A, 1016B and 1018B are similar to each other and can include similar devices. Residence 1018B includes a cable modem 1030B, a set top box 1036B, a game controller 1038, a television 1034 and a user device 1032. User device 1032 is similar to user device 1022. Head end 1008B is similar to head end 1008A, and ISP infrastructure 106B is similar to ISP infrastructure 1006A. Televisions 1024 and 1034 are monitors, smart televisions, or other audio/video equipment. Networks 1002A and 1002B can include cameras, security equipment, fire and safety equipment, smart appliances, etc. in communication with infrastructure 1006A and 106B in some embodiments. ISP infrastructure 1006A and 106B can each include fiber optic cable, coaxial cable, remote nodes, splitters, and other equipment for cable customers in some embodiments. The equipment can include amplifiers, remote physical devices or layers and remote media access control devices or layers. Intermediate nodes in ISP infrastructure 1006A and 106B can process data packets and monitor latency and traffic at various points in network. BQUICK_TOP server 1005, BQUICK ISP_B server 1012B, BQUICK_ISP_A server 1012A are controlled by ISPs (e.g., respective ISPs) in some embodiments.

ISP infrastructure 106B is coupled to residences 1016B and 1018B via a coaxial cable in some embodiments. Cable modem 1030B is a device configured to connect devices in residence 1018B to the ISP infrastructure 106B. Cable modem 1030 includes a computer, router, gateway, or other communication device in some embodiments. Modem 1030 can be configured to provide a wireless network for communicating with devices in residence 1018B. Repeaters, amplifiers, signal conditioners, etc. can be provided on the cable associated with modem 1030 in some embodiments. Cable modem refers to any device for communicating across a cable in some embodiments. Optical network unit 1020 and modem 1030 provide data connection to the ISPs data pipe over fiber or cable. All devices inside the home can be connected to the modem over Wi-Fi or Ethernet for internet connectivity. Each node (e.g., routers, repeaters, modems, Wi-Fi access points) inside the home can introduce latency. ONU 1020 and modem 1030 can be any device at a home or business that connects networking devices to ISPs provided internet data pipe over coaxial cable, fiber optic cable or digital subscriber line (DSL) or cell connection (e.g., via a tower (e.g., 5G, LTE modem)) in some embodiments.

Set top box 1036 is configured to receive and decode digital television signals for viewing on television 1034. Set top box 1036 can be configured for gaming operations and can communicate with a game controller 1038. Set top box 1036 can also be configured to provide internet access, shopping services, home automation, audio features, screen mirroring, etc. Set top box 1036 includes one or more processors, memory, dedicated graphics processing units (GPUs), and/or storage capacity for storing games, applications (apps), latency data, and recorded content in some embodiments. Set top box refers to any device that connects to a television set or monitor and allows users to receive and decode video signals. A set top box can serve as an interface between a television set and various broadcast media sources, such as cable, satellite, or internet-based streaming services in some embodiments. A dashed line in the drawings can represent a virtual connection and a solid line can represent a physical connection (e.g., wires or fiber optic cable).

The cloud infrastructure 1004, head end 1008A, and head end 1008B are in communication with the internet 1009 virtually or directly. Head end 1008A and head end 1008B can be associated with buildings 111A and 111B, respectively. Communication system 100 is generally an end-to-end combination of networking elements used for networking traffic from a home or business to internet 1009 (e.g., public internet) in some embodiments. In some embodiments, cloud infrastructure 1004 is a set multiple servers, switches, storage units. ISPs can have pool of data center/cloud servers co-located with head ends 1008A and 1008B or dedicated links to cloud infrastructure 1004 from head ends 1008A and 1008B and head end connections to internet 1009.

Although cloud infrastructure 1004 is shown as single block, cloud servers, data servers can be collocated with ISP head ends 1008A and/or 1008B. The cloud servers can be at third party private facility and ISPs can have dedicated physical links or links via internet 1009. Depending on congestion and server processing capabilities, cloud infrastructure 1004 can be a source of latency. Cloud server processing elements can be upgraded to support latency monitor applications (E.g., BQUICK applications) or can configure devices to support low latency services in some embodiments. Head ends 1008A and 1008B can be a central facility (e.g., a central office. A head end refers to a facility where internet data or audio/video content is received, processed, and routed to end subscribers like residential or business owners in some embodiments. Head ends 1008A and 1008B can have multiple switching, routing, data metering, queuing, security elements, and/or other devices which can introduce the latencies. Head ends 1008A and 1008B can also host Cable Modem Termination Systems (CMTS) in a cable network, DSLAM (Digital Subscriber Line Access Multiplexor) in a DSL network, and OLT (Optical Line Terminal) in a fiber network.

Networks 1002A and 1002B is operated by one of as ISP-A and ISP-B. ISPs extend their services to various residences or businesses within communities, cities, or specific regions. Networks 1002A and 1002B represents two distinct networks served by same or different ISPs, which may be situated in the same neighborhood or entirely different regions or countries. Homeowners or business proprietors seek out ISPs offering services in their local areas and subscribe to internet service accordingly.

### B. Applications

System 100 advantageously includes an ISP infrastructure BQUICK application 1056A for ISP infrastructure 1006A, a head end BQUICK application 1058A for head end 1008A, a modem BQUICK application 1020A for optical network unit 1020, a user device BQUICK application 1022A for user device 1022, and a television BQUICK application 1024A for television 1024. Applications 1056A, 1058A, 1020A, 1022A, and 1024A can be software apps or programs designed to perform specific tasks or provide particular functions as described herein (e.g., latency monitoring, latency analysis, and latency optimization and the communication and storage of data related thereto). Applications 1056A, 1058A, 1020A, 1022A, and 1024A can be provided on any electronic devices in communications system 100 including but not limited to servers, computers, smartphones, tablets, smart devices, appliances, cameras, security devices, vehicles, user devices, and other digital platforms. In some embodiments, applications 1056A, 1058A, 1020A, 1022A, and 1024A can be executed on Windows, macOS, iOS, Android, or other operating systems or can be web-based and accessible through internet browsers. In some embodiments, applications 1056A, 1058A, 1020A, 1022A, and 1024A can be cross-platform with an ability to be executed on multiple OS environments. Applications 1056A, 1058A, 1020A, 1022A, and 1024A can be installed from various sources such as app stores, software repositories, or directly from ISP's website. In some embodiments, applications 1056A, 1058A, 1020A, 1022A, and 1024A are configured to communicate with BQUICK_TOP server 1005 via a virtual connection. In some embodiments, applications 1056A, 1058A, 1020A, 1022A, and 1024A are configured to communicate with BQUICK_TOP server 1005 via BQUICK ISP_A server 1012A. Applications 1056A, 1058A, 1020A, 1022A, and 1024A can be updated through app stores or via automatic updates depending on device settings.

BQUICK applications 1056A, 1058A, 1020A, 1022A, and 1024A are configured to facilitate integration and communication with other services or platforms, sharing of data, collaboration, and/or access to additional functionalities seamlessly. Applications 1056A, 1058A, 1020A, 1022A, and 1024A allow optical network unit 1020, television 1024 and user device 1022 to monitor latency, store subscription information (e.g., classic bandwidth in Megabits per second (MPPS), monitor low latency bandwidth (MBPS), max jitter in milliseconds), and provide options for upgrading internet service. The latency information and subscription information can be tracked according to device, device type, user identification, application, residence identification, etc. in some embodiments. The latency information can be provided in a packet with a time stamp to BQUICK_TOP server 1005 in some embodiments. A user interface can be provided by applications 1056A, 1058A, 1020A, 1022A, and 1024A on optical network unit 1020, television 1024 and user device 1022 to upgrade or downgrade to a different level of service in light of latency information. The different level of service can be provided to latency server 150 and BQUICK_TOP server 1005, BQUICK ISP_A BQUICK server 1012A, or BQUICK ISP_B BQUICK server 1012B in some embodiments.

System 100 advantageously includes an ISP infrastructure BQUICK application 156B for ISP infrastructure 106B, a head end BQUICK application 1058B associated with head end 1008B, a modem BQUICK application 1030B for modem 1030, and a set top box BQUICK application 1036B for set top box. Applications 156B, 1058B, 1030B, and 1036B are similar to applications 1056A, 1058A, 1020A, 1022A, and 1024A. In some embodiments, when applications 1030B, 1036B, 1056A, 156B, 1058B, 1058A, 1020A, 1022A, and 1024A are installed or associated devices join the network, the applications 1030B, 1036B, 1056A, 156B, 1058B, 1058A, 1020A, 1022A, and 1024A register at server 1012 as being compliant for operations described herein. User device 1032, television 1034, and game controller 1038 can also include an application similar to BQUICK applications 1022A and 1024A.

In some embodiments, BQUICK applications 1030B, 1036B, 1056A, 156B, 1058B, 1058A, 10201020A, 1022A, and 1024A are latency applications and are configured to communicate data so that a topology report can be provided. The topology report identifies devices/networks from end-to-end. Latency requirements of each device is provided in the report (e.g., on a device by device, type of usage by type of usage, user ID by user ID, or application by application basis) in some embodiments. The report can be stored at \server 1012 in some embodiments. The latency requirements across the topology can be used to shape traffic, prioritize flow, etc. In some embodiments, the report tracks which devices are offline so that bandwidth reserved for those devices can be used for another device in some embodiments. In some embodiments, the report tracks whether the device is not running a low latency (e.g., BQUICK) application and yet is online so that bandwidth reserved for that device can be used for other devices in some embodiments. Offline refers to a state where a device, system, or application is not actively communicating with other devices or accessing online resources in some embodiments. A device that is off or asleep is offline in some embodiments. A low latency application can be offline when the low latency application is not running in some embodiments.

In some embodiments, the low latency packets are marked so that applications 1030B, and 1036B, 1056A, 156B, 1058B, 1058A, 1020A, 1022A, and 1024A can process the packets and flow as a low latency flow. In some embodiments, the end device (e.g., application 1024A) can send a command or request indicating that latency requirements are not being met and each application in the path (applications 1020A 1056A, and 1058A) can respond to that command to process the packets for that device at a higher priority or remove traffic from that path in some embodiments. Latency issues can be sourced from an AP, a mesh, a device, or a node. Tracking bit rates or latencies at each location allow solutions to be directed to the particular location of the latency issue.

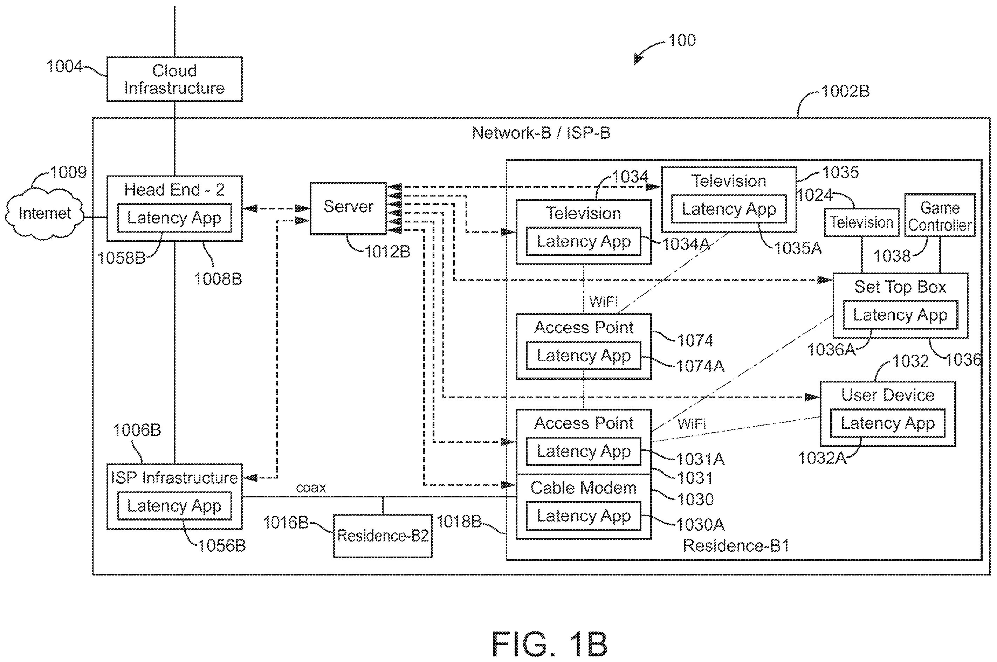

With reference to FIG. 1B, residence 1018B can include an access point 1031 in communication with modem 1030, a wireless router 1074 in communication with television 1034, a television 1035, set top box 1036, and user device 1032. Access point 1031 can be integrated with modem 1030 or can be a separate unit. User device 1032 includes a user device BQUICK application 1032B, and access point 1031 includes a latency access point application 1031B. Router 1074 includes a wireless router BQUICK application 1074B, television 1034 includes a television BQUICK application 1034B, and television 1035 includes a television BQUICK application 1035B. BQUICK_TOP server 1005, BQUICK_ ISP_A server 1012A, and BQUICK_ ISP_B server 1012B are in virtual communication with applications 1030B, 1031B, 1036B, 1074B 1032B, 1034B, 1035B, 156B, and 1058B in some embodiments. A server refers to any computing device that provides services or resources to other computers or clients within a network in some embodiments.

Applications 1030B, 1031B, 1036B, 1074B, 1032B, 1034B, 1035B, 156B, and 1058B are similar to applications 1056A, 1058A, 1020A, 1022A, and 1024A. Applications 1030B, 1031B, 1036B, 1074B, 1032B, 1034B, 1035B, 156B, and 1058B allow modem 1030, televisions 1034 and 1035, access point 1031, router 1074, set top box 1036, and user device 1032 as well as other cable modem termination systems to monitor latency, store subscription information (e.g., classic bandwidth in Megabits per second (MPPS), low latency bandwidth (MBPS), max jitter in milliseconds), and provide options for upgrading internet service. A user interface can be provided on optical network unit 1020, television 1024 and user device 1022 to upgrade or downgrade to a different level of service in light of latency information. This ability is available even if the devices are third party devices in some embodiments. In some embodiments, application 1031B or 1074B can be configured to update network topology information to BQUICK TOP server 1012, and applications 1030B, 1031B, 1036B, 1074B, 1032B, 1034B, 1035B, 156B, and 1058B can monitor low latency resources, request services, register devices, and request different latency treatment (e.g., for video, audio, commands, downloads, etc.). In some embodiments, devices or nodes associated with applications 1030B, 1031B, 1036B, 1074B 1032B, 1034B, 1035B, 156B, and 1058B can include algorithms for changing packet priority with time and latency requirements. Applications 1030B, 1031B, 1036B, 1074B, 1032B, 1034B, 1035B, 156B, and 1058B can communicate using virtual or logical connections (e.g., using internet 1009).

Access point 1031 is a networking device that allows Wi-Fi-enabled devices to connect to a wired network. Access point 1031 serves as a bridge between wireless devices, such as wireless router 1074, set top box 1036, user device 1032, televisions 1034 and 1035, and the wired network infrastructure, such as, modem 1030, routers, switches, and servers, in some embodiments. Wireless router 1074 can be a networking device that provides a wireless access point for a wireless network. Wireless router 1074 serves as a hub for a wireless local area network (LAN), allowing multiple devices in or around residence 1018B to connect to the internet and communicate with each other. Wireless router 1074 can include wirelessly built-in Ethernet switches which provide multiple ports for connecting wired devices. A wired connection can connect router 1074 to access point 1031 or modem 1030 in some embodiments. Wireless router refers to any device that provides a wireless access point for a wireless network in some embodiments.

With reference to FIGS. 1B-1C, applications 1030B and 1032B are in communication with BQUICK_TOP server 1005 via a logical interface. The architecture of applications 1030B and 1032B can be used in any of applications 1031B, 1036B, 1074B 1034B, 1035B, 156B, 1058B, 1056A, 1058A, 1020A, 1022A, and 1024A. The logical interface is a virtual interface that represents a specific network configuration or functionality within a networking device, such as modem 1030 or user device 1032. The logical interface is software defined and can be created, configured, and managed within the device's operating system in some embodiments. Applications 1030B and 1032B can be provided with modems, routers, access points, mesh devices, set top boxes, AR/VR devices, game consoles, phones, over the top devices (OTTs), etc. Applications 1030B, 1032B, and cloud infrastructure 1004 can communicate using app to app communication. App to app communication is an exchange of data, messages, or commands between two or more software applications running on the same device or different devices over a network in some embodiments. App to app communication enables seamless integration and collaboration between different apps, allowing them to share information, trigger actions, or synchronize state without requiring user intervention in some embodiments. BQUICK_TOP server 1012 can include an application for monitoring and/or determining end to end latency.

In some embodiments, applications 1020A, 1024A, 1032B, 1034B, 1035B, 1036B, and 1032B are client level applications. Applications 1036B can be configured for highest priority (e.g., lowest latency applications) while ordinary streaming latencies are associated with applications 1020A, 1024A, 1032B, 1034B, 1035B, 1032B. Applications 137A and 1031B are node level application and can be configured to provide or assign priority for applications 1020A, 1024A, 1032B, 1034B, 1035B, 1036B, and 1032B (client level applications) and associated devices. Application 1030B can be configured to provide or assign priority between application 1036B, applications 137A and 1031B (e.g., node level applications), and applications 1020A, 1024A, 1032B, 1034B, 1035B, and 1032B (e.g., client level applications) as well as their associated devices. Cloud level applications can include applications 156B and 1058B in some embodiments. In some embodiments, the partitioning of applications 156B, 1058B, 1020A, 1024A, 1030B, 1032B, 1034B, 1035B, 1036B, 137A, and 1032B allows for segregation of local and cloud processing, reduction in cloud server communication and ISP bandwidth, local data storage and security, availability of local resources (including edge processing and filtering of information), and faster response to low latency devices. In some embodiments, application 1030B has a server extension and handles communication between server 1012 and applications 1020A, 1024A, 1032B, 1034B, 1035B, 1036B, and 1032B.

When application 1030B includes the server extension, application 1030B can be a client level application or a cloud level application and maintain a virtual connection to server 1012 in some embodiments. The server extensions can provide advantages of decoupling development from ISPs which can be helpful for standardization, of having a direct data path from application 1020A or 1031B to app developer servers, of maintaining local data privacy, of availability of local resources (e.g., local machine learning (ML), edge processing and filtering information), and of faster response to local low latency gadgets or devices in some embodiments.

In some embodiments, applications 156B, 1058B, 1020A, 1024A, 1030B, 1032B, 1034B, 1035B, 1036B, 137A, and 1032B can achieve synchronization of the wall clock across all nodes and end user devices. Applications 156B, 1058B, 1020A, 1024A, 1030B, 1032B, 1034B, 1035B, 1036B, 137A, and 1032B utilize timestamps for low-latency data packets at each node. This enhancement enables the determination of latency at each node and reporting to server 1012 in some embodiments. By utilizing a precision time protocol (PTP), applications 156B, 1058B, 1020A, 1024A, 1030B, 1032B, 1034B, 1035B, 1036B, 137A, and 1032B can distinguish whether latency arises from the home network, an ISP, or cloud servers using time stamps in some embodiments. Each device can have an associated PTP clock that communicates with the application associated with the device. The latency per node can be shared across networks so that networks can avoid devices having latency issues or can perform other operations to reduce latency at that node (e.g., divert higher latency traffic away from the node having issues). The PTP clock can be derived form a satellite clock in some embodiments.

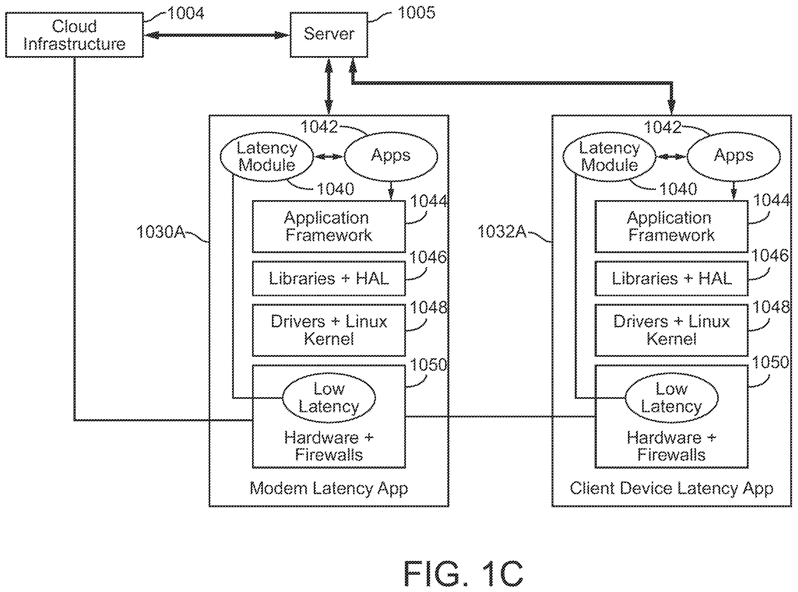

With reference to FIG. 1C, applications 1030B and 1032B each include a latency module 1040, applications 1042, an application framework 1044, libraries and hardware abstraction layer 1046, drivers and linux kernel 1048, and hardware and firewalls 1050. In some embodiments, latency module 1040 is configured to control and monitor hardware and firewalls based upon latency. Latency module or BQUICK module 1040 is software configured to provide the low latency operations described herein. Applications 1042 are apps for performing various operations and can include third part apps (e.g., android package kit (APK)). Application framework 1044 is a structured set of software components that provide the necessary infrastructure for building and running applications.

Libraries and hardware abstraction layer 1046 provides standardized interfaces for device drivers to interact with hardware components. Libraries and hardware abstraction layer 1046 allows applications and system services to access hardware functionalities in a consistent manner across different devices. Libraries and hardware abstraction layer 1046 provide collections of pre-written code that developers can use to perform common tasks or implement specific functionalities and generally contain reusable functions, classes, or modules that provide specific capabilities.

Drivers and Linux kernel 1048 serves as the bridge between the hardware and the software layers of the system, managing system resources in some embodiments. Drivers and Linux kernel 1048 provide essential services and facilitate communication between software processes and hardware devices in some embodiments. Drivers and Linux kernel 1048 includes software components that facilitate communication between the operating system (OS) and hardware devices in some embodiments.

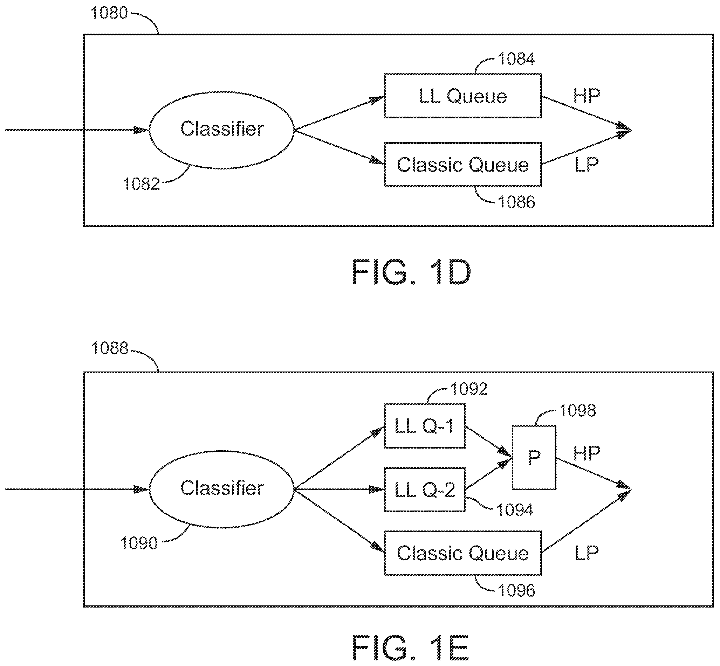

With reference to FIG. 1D, a function, service, process, or operation 1080 can controlled by any of applications 1030B, 1031B, 1036B, 1074B, 1032B, 1034B, 1035B, 156B, 1058B, 1056A, 1058A, 1020A, 1022A, and 1024A (FIGS. 1A and 1B). Operation 1080 use a classifier 1082, a low latency queue 1084, and a classic queue 1086. Queues 1084 and 1086 are memory or data structures used to manage the flow of packets or messages within a network device or system 100 (FIG. 1A). Queue 1084 is associated with a high-performance path, and queue 1086 is associated with a low performance path in some embodiments. A queue refers to any structure for storing information (e.g., packets) in some embodiments. Any networking device can have separate queue to support low latency traffic and operation can be performed any device in communication system 100 (FIG. 1A). Applications 1030B, 1031B, 1036B, 1074B, 1032B, 1034B, 1035B, 156B, 1058B, 1056A, 1058A, 1020A, 1022A, and 1024A can report latency for each queue independently.

Queues 1084 and 1086 are configured as first-in-first-out (FIFO) buffers that temporarily hold packets or messages before messages are transmitted or processed in some embodiments. Queue 1084 can store messages for the high-performance path (e.g., low latency path), and queue 1086 can store messages for the low performance path (e.g., high latency path) in some embodiments. In some embodiments, a low latency operations may use a low performance path, and a high latency operations may use the high performance path, or each uses the same path. A path refers to any communication route or channel through which data or information travels from a source to a destination (e.g., through devices and across mediums) in some embodiments. A path can include intermediate components and links involved in transmitting data between two or more points in one or more networks in some embodiments. A low latency path refers to a path for low latency traffic in some embodiments.

Classifier 1082 is processor and/or software configured to categorize or classify network traffic based on certain criteria (e.g., by latency requirements and/or priority). Classifier 1082 is configured to enforce network policies, prioritize traffic (e.g., for the high performance or low performance path), and/or apply specific actions based on the classification results in some embodiments. Classifier 1082 is used to differentiate between different classes of traffic (e.g., voice, video, data) and apply QoS policies to ensure that critical applications receive adequate bandwidth and latency requirements. Classifier 1082 prioritizes traffic based on predefined criteria, ensuring that important or time-sensitive applications receive preferential treatment over less critical traffic by appropriately providing traffic to queue 1084 and queue 1086. Classifier 1082 can utilize information about customer subscriptions (e.g., device level, user level, residence level) to classify traffic in some embodiments.

With reference to FIG. 1E, an operation 1088 can be controlled by any of applications 1030B, 1031B, 1036B, 1074B, 1032B, 1034B, 1035B, 156B, 1058B, 1056A, 1058A, 1020A, 1022A, and 1024A. Operation 1088 is similar to operation 1080 and utilizes a classifier 1090, a first low latency queue 1092, a second latency queue 1094, a classic queue 1096, and a priority queue 1098. Queues 1092, 1094, 1096 and 1098 are memory or data structures used to manage the flow of packets or messages within a network device or system 100 (Fig. 1A). Queues 1092 and 1094 are associated with a high performance path, and queue 1096 is associated with a low performance path in some embodiments. Queue 1098 receives messages from queues 1092 and 1094 and provide messages or data to the high performance path based upon a priority scheme associated with queues 1092 and 1094 in some embodiments. Classifier 1090 is similar to classifier 1082 and is configured to categorize or classifying network traffic based on certain criteria (e.g., by latency requirements) for queues 1092, 1094, and 1096 in some embodiments. In some embodiments, classifiers 1082 and 1090 are software modules operating on a device (e.g., server, ISP supplied device, user device, etc.). In some embodiments, queues 1084, 1086, 1092, 1094, 1096 and 1098 are virtual queues provided on the memory of the device configured by operation 1080 or 1088. In some embodiments, queues 1084, 1086, 1092, 1094, 1096 and 1098 are dedicated hardware queues (e.g., FIFO memories) on the device. Classifiers 1090 and 1082 and queues 1084, 1086, 1092, 1094, 1096 and 1098 are implemented in an application layer of the device and may utilize services and structures provided by the media access layer and the physical layer in some embodiments. Classifiers 1082 and 1090 can be configured by commands provided by BUICK TOP server 1012 to appropriately classify low latency traffic in some embodiments.

In some embodiments, applications 1080 and 1088 are configured to operate at nodes associated with devices including but not limited to ONU 1020, modem 1030, set top box 1036, television 1024, access point 1031, user device 1032, and/or router 1074. Applications 1080 and 1088 are configured to control and/or partition subscribed low latency bandwidth traffic (e.g., 20 Mbps vs 50 Mbps), track latency statistics (e.g., minimum, maximum, average latencies for low latency flows), process five tuples (e.g., source IP address, source port, destination IP address, destination port, transport protocol) for X number of flows (where X is any integer) with latency and/or bandwidth requirements, monitor latency introduced by a node, provide timestamps at ingress and egress ports, monitor buffer depths, perform boundary clock precision protocol (e.g., IEEE 10588-2008 standard and extensions thereof), and prioritize of traffic among multiple low latency clients. Monitored and measured information can be appended to packets for provision to other nodes and servers (e.g., server 1012). For example, time stamps can be applied to packets at each node or device. Latency can be determined by comparing time stamps. Applications 1080 and 1088 are also configured to track status of low latency applications and provide a user interface for controlling low latency configurations in some embodiments. Classifiers 1082 and 1090 and/or queues 1084, 1086, 1092, 1094, 1096 are configured by applications 1030B, 1031B, 1036B, 1074B, 1032B, 1034B, 1035B, 156B, 1058B, 1056A, 1058A, 1020A, 1022A, and 1024A (e.g., at each respective node) in some embodiments. In some embodiments, servers 1012, 1012A, and 1012B configure classifiers 1082 and 1090 and/or queues 1084, 1086, 1092, 1094, 1096 via virtual connections.

Applications 1080 and 1088 can identify end to end bandwidth available for low latency applications, provide a user real time feedback of monitored latency, and adjust latency responses. The adjustment may be in response to purchased services or bandwidth upgrades in some embodiments. In some embodiments, applications 1080 and 1088 can be configured to provide an advertisement or customer offer for low latency resources. Applications 1080 and 1088 can address variable latency for each user and adjust response for the latency level at a particular time, for a particular time period, etc. Latency information can be communicated to servers 1012A, 1012B, and 1012 and applications 1030B, 1031B, 1036B, 1074B, 1032B, 1034B, 1035B, 156B, 1058B, 1056A, 1058A, 1020A, 1022A, and 1024A as timestamps appended to packets as described herein, or to a packet identifier (e.g. 5 tuples and sequence number) in some embodiments. The time stamp information can be sent to servers 1012A, 1012B, and/or 1012 via an independent virtual/logical channel in some embodiments.

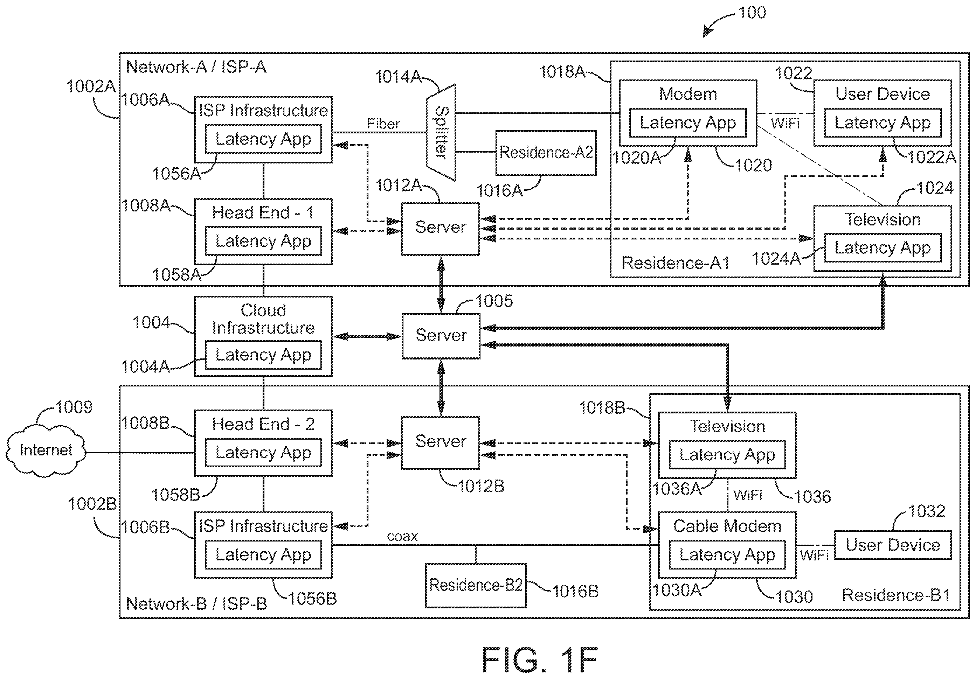

With reference to FIG. 1F, cloud infrastructure 1004 can include an application 1004A. Application 1004A is similar to applications 1030B, 1031B, 1036B, 1074B 1032B, 1034B, 1035B, 156B, and 1058B. BQUICK TOP server 1012 can be configured to monitor AR/VR applications and/or metaverse applications. An application executed on BQUICK TOP server 1012 can perform the monitoring functions. Application 1004A is in communication with BQUICK TOP server 1012. Servers 1012A and 1012B can include an application similar to application 1004A.

Using applications, 1020A, 1024A, 1030B, 1032B, 1034B, 1035B, 1036B, 137A, and 1032B, the devices given by ISPs, customer-owned AR/VR setups, mobile phones, over the top (OTT) devices, and cloud gaming clients are capable of facilitating low latency uses. Applications, 1020A, 1024A, 1030B, 1032B, 1034B, 1035B, 1036B, 137A, and 1032B allow devices in residences 1018A and 1018B to interact with the server extension integrated in the ONU 1020 and modems 1030 or routers (e.g., ISP provided). Additionally, the server extensions have the ability to filter and transmit all necessary information to servers 1012A and 1012B or share open data with application developers.

### C. Computing Environment

Prior to discussing the specifics of embodiments of the systems and methods of the present solution, it may be helpful to discuss the computing environments in which such embodiments may be deployed.

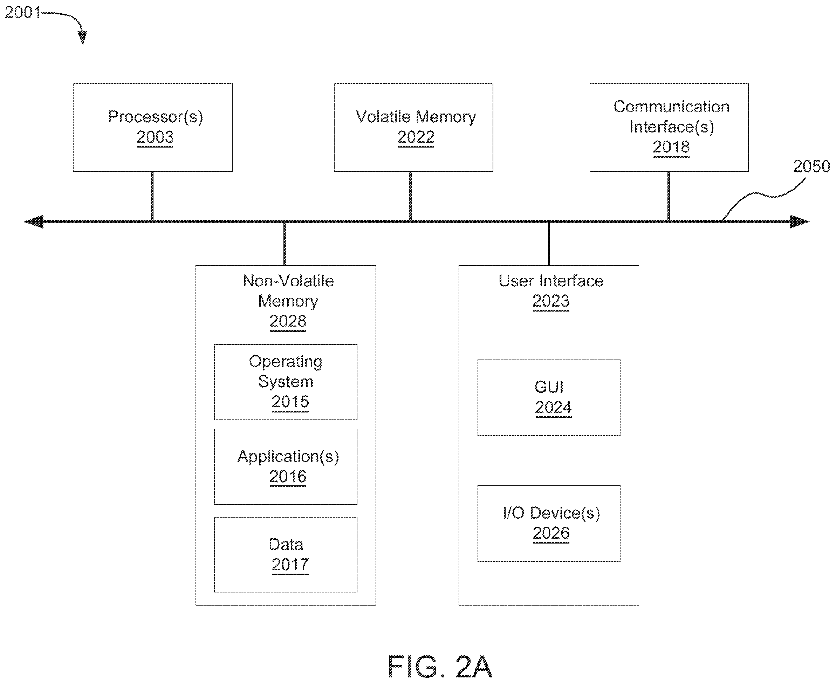

As shown in FIG. 2A, computer 2001 may include one or more processors 2003, volatile memory 2022 (e.g., random access memory (RAM)), non-volatile memory 2028 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 2023, one or more communications interfaces 2018, and communication bus 2050. User interface 2023 may include graphical user interface (GUI) 2024 (e.g., a touchscreen, a display, etc.) and one or more input/output (I/O) devices 2026 (e.g., a mouse, a keyboard, a microphone, one or more speakers, one or more cameras, one or more biometric scanners, one or more environmental sensors, one or more accelerometers, etc.). Non-volatile memory 2028 stores operating system 2015, one or more applications 2016, and data 2017 such that, for example, computer instructions of operating system 2015 and/or applications 2016 are executed by processor(s) 2003 out of volatile memory 2022. In some embodiments, volatile memory 2022 may include one or more types of RAM and/or a cache memory that may offer a faster response time than a main memory. Data may be entered using an input device of GUI 2024 or received from I/O device(s) 2026. Various elements of computer 2001 may communicate via one or more communication buses, shown as communication bus 2050.

Computer 2001 as shown in FIG. 2A is shown merely as an example, as clients, servers, intermediary and other networking devices and may be implemented by any computing or processing environment and with any type of machine or set of machines that may have suitable hardware and/or software capable of operating as described herein. Processor(s) 2003 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 2018 may include one or more interfaces to enable computer 2001 to access a computer network such as a Local Area Network (LAN), a Wide Area Network (WAN), a Personal Area Network (PAN), or the Internet through a variety of wired and/or wireless or cellular connections.

In some implementations, the computing device 2001 may execute an application on behalf of a user of a client computing device. For example, the computing device 2001 may execute a virtual machine, which provides an execution session within which applications execute on behalf of a user or a client computing device, such as a hosted desktop session. The computing device 2001 may also execute a terminal services session to provide a hosted desktop environment. The computing device 2001 may provide access to a computing environment including one or more of: one or more applications, one or more desktop applications, and one or more desktop sessions in which one or more applications may execute.

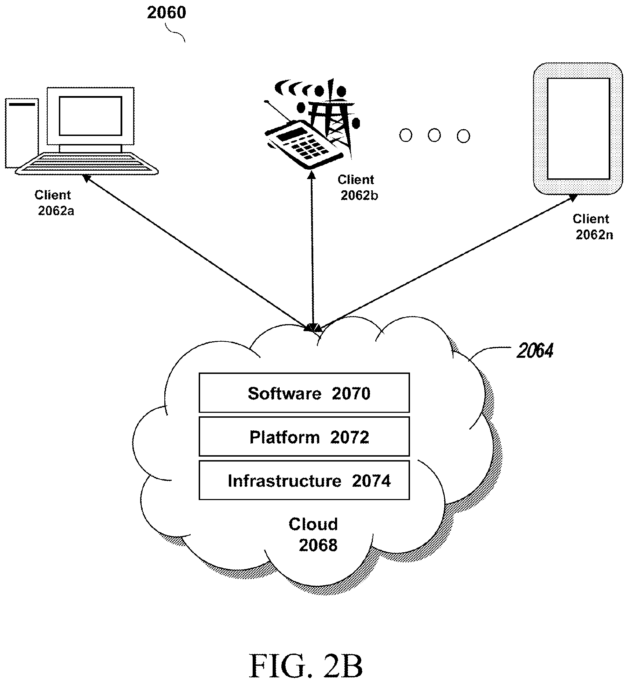

Referring to FIG. 2B, a computing environment 2060 is depicted. Computing environment 2060 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 2060 can provide the delivery of shared services (e.g., computer services) and shared resources (e.g., computer resources) to multiple users. For example, the computing environment 2060 can include an environment or system for providing or delivering access to a plurality of shared services and resources to a plurality of users through the internet. The shared resources and services can include, but not limited to, networks, network bandwidth, servers, processing, memory, storage, applications, virtual machines, databases, software, hardware, analytics, and intelligence.

In embodiments, the computing environment 2060 may provide client 2062 with one or more resources provided by a network environment. The computing environment 2062 may include one or more clients 2062a-2062n, in communication with a cloud 2068 over one or more networks 2064. Clients 2062 may include, e.g., thick clients, thin clients, and zero clients. The cloud 108 may include back-end platforms, e.g., servers 106, storage, server farms or data centers. The clients 2062 can be the same as or substantially similar to computer 2001 of FIG. 2A.

The users or clients 2062 can correspond to a single organization or multiple organizations. For example, the computing environment 2060 can include a private cloud serving a single organization (e.g., enterprise cloud). The computing environment 2060 can include a community cloud or public cloud serving multiple organizations. In embodiments, the computing environment 2060 can include a hybrid cloud that is a combination of a public cloud and a private cloud. For example, the cloud 108 may be public, private, or hybrid. Public clouds 108 may include public servers that are maintained by third parties to the clients 2062 or the owners of the clients 2062. The servers may be located off-site in remote geographical locations as disclosed above or otherwise. Public clouds 2068 may be connected to the servers over a public network 2064. Private clouds 2068 may include private servers that are physically maintained by clients 2062 or owners of clients 2062. Private clouds 2068 may be connected to the servers over a private network 2064. Hybrid clouds 2068 may include both the private and public networks 2064 and servers.

The cloud 2068 may include back-end platforms, e.g., servers, storage, server farms or data centers. For example, the cloud 2068 can include or correspond to a server or system remote from one or more clients 2062 to provide third party control over a pool of shared services and resources. The computing environment 2060 can provide resource pooling to serve multiple users via clients 2062 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In embodiments, the computing environment 2060 can provide on-demand self-service to unilaterally provision computing capabilities (e.g., server time, network storage) across a network for multiple clients 2062. The computing environment 2060 can provide an elasticity to dynamically scale out or scale in responsive to different demands from one or more clients 2062. In some embodiments, the computing environment 2060 can include or provide monitoring services to monitor, control and/or generate reports corresponding to the provided shared services and resources.

In some embodiments, the computing environment 2060 can include and provide different types of cloud computing services. For example, the computing environment 2060 can include Infrastructure as a service (IaaS). The computing environment 2060 can include Platform as a service (PaaS). The computing environment 2060 can include serverless computing. The computing environment 2060 can include Software as a service (SaaS). For example, the cloud 2068 may also include a cloud-based delivery, e.g., Software as a Service (SaaS) 2070, Platform as a Service (PaaS) 2072, and Infrastructure as a Service (IaaS) 2074. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by Right Scale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g., DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 2062 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP and may use Representational State Transfer (REST) protocol or Simple Object Access Protocol (SOAP). Clients 2062 may access PaaS resources with different PaaS interfaces. Some PaaS interfaces use HTTP packages, standard Java APIs, Java Mail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 2062 may access SaaS resources through the use of web-based user interfaces, provided by a web browser (e.g., GOOGLE CHROME, Microsoft INTERNET EXPLORER, or Mozilla Firefox provided by Mozilla Foundation of Mountain View, California). Clients 2062 may also access SaaS resources through smartphone or tablet applications, including, e.g., Salesforce Sales Cloud, or Google Drive app. Clients 2062 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Although examples of communications systems described above may include devices operating according to an Ethernet and other standards, it should be understood that embodiments of the systems and methods described can operate according to alternative standards and use wireless communications devices other than devices configured as devices. For example, multiple-unit communication interfaces associated with cellular networks, satellite communications, vehicle communication networks, wired networks, and networks can utilize the systems and methods described herein without departing from the scope of the systems and methods described herein.

### D. Audio Latency Measurement

Disclosed herein are systems and methods of audio latency measurement. For example, audio latency can be measured according to a difference between a first detection of an audio wave and a second detection of the audio wave. For example, the second detection of the audio wave can be a detection of an audio wave played responsive to a detection of the first audio wave. The difference between the first detection and the second detection can identify a round-trip time through a data path of a system which can include various constituent links. According to the substitution of various components, the system can identify a difference between the round-trip latencies to estimate a change to the latency of the constituent links. In some embodiments, the constituent links can include a connection over a network fabric of places out of range of audio communications, as for a teleconference call, video meeting or online video game.

For clarity of the disclosure, before proceeding with further description of the systems and methods provided herein, illustrative descriptions of various terms are provided:

A speaker may refer to or include an electroacoustic transducer that converts an electrical audio signal into a corresponding sound, in some embodiments. The speaker may couple with a source according to any of various wired or wireless communications links. For example, a speaker can be part of a home audio system or a portable Bluetooth speaker used to play music or audio content such as an audio component of a video conference or videogame. A microphone may refer to or include an acoustic-to-electric transducer or sensor that converts sound into an electrical signal, in some embodiments. The microphone may couple with a source according to any of various wired or wireless communications links which may be shared with, similar to, or different from the communications links of a speaker. For example, a microphone can be used in recording and broadcasting, such as for transmission of audio content related to video games or teleconferences. Speakers or microphones coupled with (e.g., integral to or in communication with) a device may be referred to as speakers or microphones of the device.

An audio wave may refer to or include a pressure wave generated by a transducer of a speaker or sensible by a transducer of a microphone, or a digital encoding corresponding to the pressure wave, in some embodiments. For example, an audio wave can be recorded and transmitted as or based on a digital audio file or communicated as a physical sound wave via one or more speakers. In some embodiments, the sound wave includes (or consists substantially of) content within the range of human hearing, typically described as between 20 Hz and 20 kHz. However, in some embodiments, an audio wave includes ultrasonic or infrasonic content, such as to convey information without generating a disturbance to or being heard or discerned by human users. In some embodiments, an audio wave may be provided as a sole input to a speaker. In some embodiments, an audio wave may be combined with (overlaid) other audio content, such as audio content of a teleconference or video game. The audio wave may be based on and transmitted as different types of waves, such as a sine-wave.

Storage accessible to the device may refer to or include any form of data storage medium or system, such as internal hard drives, external drives, RAM, cloud storage, or network-attached storage, that a device can read from or write to, in some embodiments. For example, storage accessible by the device can include local storage or remote storage.

Communications may refer to or include the transmission of information between two or more devices or systems, involving the exchange of data, voice, video, or other forms of information via wired or wireless methods, in some embodiments. For example, communications can be provided within or between networks according to a communication of an audio wave. Latency of communications may refer to or include the time delay experienced between the transmission of data from a first point to a reception at a second point, in some embodiments. For example, latency can be measured between transducers to determine a medium-latency (e.g., of a pressure wave or digital data) or can include latency of a system to process information. Latency is often measured in milliseconds (ms).

A specific pattern of a sine-wave may refer to or include the characteristics or variations in the amplitude, frequency, and phase of a sine-wave, which determine its shape and properties in a given context, in some embodiments. In some embodiments, the specific pattern may refer to a time-invariant pattern (e.g., of a standing wave). In some embodiments, the specific pattern may refer to a time-variant pattern. The specific pattern can correspond to a pattern embedded in an audio wave, such as a pattern stored in an audio file or embedded in a pressure wave propagated by a speaker.

A configuration of a device may refer to or include the arrangement and settings of a device to direct, control, manage and/or aid in its function, operation and/or performance, including the configuration of any programs, applications, processes, services or tasks operating on the device and any hardware components used by the device. The configuration of a device can include a selection of a driver or application (or setting thereof), communications protocol, encoder/decoder, or installed/selected hardware (e.g., memory allocation, or selection of a speaker/microphone). The configuration of a device can include configuration of aspects of wired or wireless audio communications, such a list of Bluetooth settings such as pairing mode, device name, and security protocols (e.g., Bluetooth 5.1) to aid connectivity between devices. In another example, a configuration can include Wi-Fi settings such as SSID, encryption type, and channel selection (e.g., 802.11ac) to aid wireless network access. Further examples can include computer-computer communication links (e.g., Ethernet), as may be used to communicate a digitally represented audio wave between devices, or adjustments to the various drivers, stacks, applications, or hardware discussed above.

Associating latency with the configuration may refer to or include identifying, determining, linking and/or correlating the latency to the specific configuration of a device, including configuration of any applications, programs, processes, services, tasks and/or hardware components used by device in association with the communications for which latency is being measured, detected or identifying. For example, associating latency can involve identifying or linking delays related to a selection or configuration of a driver, application, speaker, microphone, or other component of a device to a measured latency. Configuration of software components can include settings related to packet queues, prioritization, QoS, encoding/decoding of audio or visual content, or echo cancelation settings. Configuration of an application can include settings for a video call or video game. A selection of a speaker or microphone can include a communications protocol such as a list of Bluetooth settings such as pairing mode or security protocols (e.g., Bluetooth 5.1) to identify factors affecting connectivity performance.

Echo cancellation may refer to or include techniques used to eliminate or reduce the echo effect in audio communication systems, enhancing the clarity and quality of the transmitted sound, in some embodiments. For example, echo cancellation can use digital signal processing algorithms that detect and subtract the echo from the original audio signal in real-time (e.g., adaptive filtering). For example, echo cancellation can be used in telephony and video conferencing to prevent feedback loops and improve a user experience. Disabling echo cancellation may refer to or include the process of turning off the echo cancellation feature in an audio communication system, in some embodiments. For example, disabling echo cancellation may disable a process implemented proximal to a transducer or at a post processor coupled with the transducer.

A video conference may refer to or include a visual communication session between two or more participants, using video-enabled devices to connect over a network, in some embodiments. For example, a video conference can involve cameras and microphones of participants to transmit and receive audio and video, facilitating user-to-user interaction as if they were in the same location. The video conference may include live and/or recorded video and audio communications that are communicated in real-time or near real-time or with requirements or expectations of low latency.

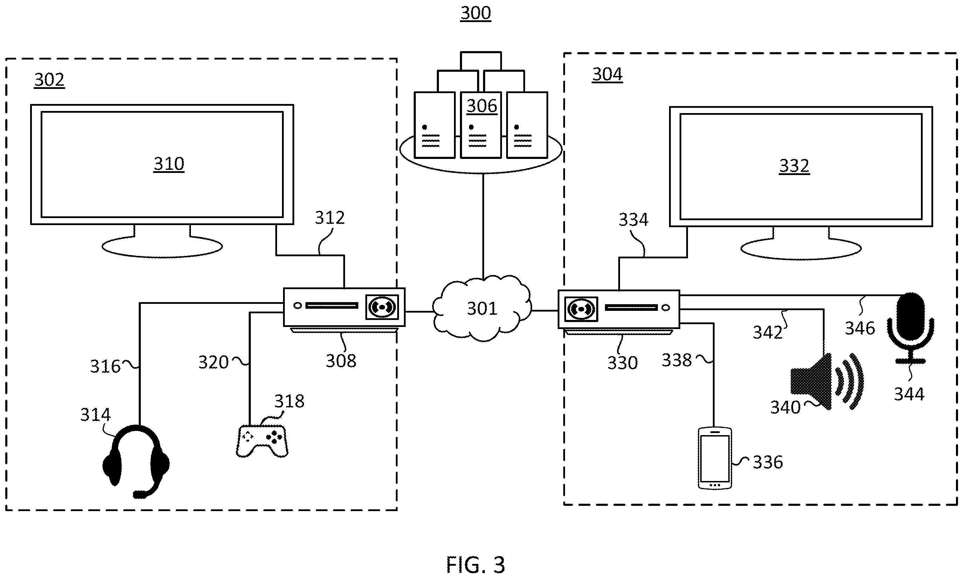

With reference to FIG. 3, a network diagram 300 of a system to measure audio latency between devices is provided, according to some embodiments. Audio latency can be measured between various devices with a microphone 344 and a speaker 340, such as a set top box (STB) 308 or gaming device. For example, a first network 302 is depicted to include a headset 314 coupled with a first STB 308; a second network 304 is depicted to include a second STB 330 coupled with a discrete speaker 340 and microphone 344. According to the present disclosure, audio latency can be measured within or between networks 302, 304. Such detected latency can be presented to the user (e.g., to aid the user in selection of an audio device). For example, the selection of a low-latency audio headset 314 according to a presentation of the detected latency can aid a user to reduce latency. The detected latency can be used to align audio content with other content such as haptic content or video content provided to a display (e.g., a first display 310 of the first network 302 or a second display 332 of the second network 304). Accordingly, latency can be adjusted to synchronize audio with other content of a video conference, video game, or other application. A synchronization of video content can relate to video content local to one of the first network 302 or the second network 304 or communication therebetween (e.g., a video conference or video game operating across the networks 302, 304). Synchronization may be realized by dropping video frames to align audio content with video content (e.g., achieve lip-sync between an audio stream and visual stream). For example, a number of dropped frames can be selected to accord with an audio latency determined by at least a portion of the devices depicted in the network 300 and as otherwise described throughout the present disclosure.

The first network 302 and second network 304 can refer to operatively coupled sets of devices. Each network can include any number of devices coupled via any of various links (e.g., acoustic links, Ethernet links, Wi-Fi links, HDMI links, or analog audio wired links). A network fabric 301 couples the first network 302 with the second network 304. The network fabric 301 can include a LAN or WAN connection (e.g., the Internet), one or more ISPs, or another interface. The network fabric 301 can further couple with one or more servers 306 which can be disposed, physically or logically, remote from at least one of the first network 302 and the second network 304. The servers 306 can serve applications for either or both of the first network 302 and the second network 304 (e.g., a videogame or teleconference application). In some embodiments, the servers 306 can include a BQUICK_TOP server 1005. For example, upon determination of a latency, a STB can communicate a determined latency to the BQUICK_TOP server 1005 which can use the latency to manage video conference, video game, streaming video, or other data including an audio component. In some embodiments, the management can aid to synchronize the audio component with other components such as a video component or haptic component.

The first network 302 includes a speaker 340 and a microphone 344 (depicted as a headset 314) coupled with a set top box 308 over a first communications link 316 which may be implemented according to a wired, Bluetooth, Wi-Fi, radio frequency (RF), or other communications protocol. Referring particularly to the illustrative example of a Bluetooth protocol, the link may operate over a Bluetooth link operating according to 3.0, 4.0, 4.1, 5.0 or other Bluetooth specification. Latency may vary according to a selected protocol or specification, along with other variables, such as interference or congestion related to another device such as a wireless controller 318. For example, the wireless controller 318 may be coupled, via a second communications link 320, with the STB 308 or other proximal devices.

The second network 304 includes a speaker 340 and microphone 344, each of which may be coupled with a second STB 330 over any of various wired or wireless links. The links can include the Bluetooth, Wi-Fi, or other links as discussed with regard to the first network 302, and may, in various embodiments, be a same or different link type as a corresponding link of the first network 302. For example, the speaker 340 can couple with the second STB 330 over a third communications link 342 and the microphone 344 can couple with the second STB 330 over a fourth communications link 346. The third communications link 342 and the fourth communications link 346 can be a same or different link type. Either of the third communications link 342 or the fourth communications link 346 can further be affected by congestion or interference of other devices such as a fifth communications link 338 of a mobile device 336 of the second network 304.

Each of the first network 302 and the second network 304 can include a display device (e.g., the first display 310 of the first network 302 and the second display 332) of the second network 304. The respective displays 310, 332 can be coupled with respective STBs 308, 330 via further communications links 312, 334 which can include wired links such as HDMI or DisplayPort or a wireless link such as Wi-Fi (e.g., Miracast). In some embodiments, one or more of the depicted devices can be substituted for another device (e.g., a STB can be substituted for a mobile device such as a phone or tablet), or functionality of one or more devices can be integrated into a same device (e.g., a STB may be integrated into a television, access point or router).

The first STB 308 or STB 330 (or another device substituted therefore) can retrieve a stored audio wave. The stored audio wave may be embedded in a .MP3, WAV, or other audio file to store and communicate the audio wave. For example, a STB can locally store or receive the audio wave for transmission. In some embodiments, the audio wave includes (e.g., is) a sine-wave extending for a specific length of time. In some embodiments, the audio wave can be any other type/shape of wave that is communicated between (and detected by) a device such as a STB. For example, the audio wave can be communicated simultaneously and without interruption of other audio content of the STB (e.g., by playing the audio wave in conjunction with other content of a video conference). The audio wave can have a specific pattern, such as a fixed or time-variable frequency or a repeating pattern for a discrete period of time (e.g., frequency sweep or fixed tone). In some embodiments, the audio wave includes human sensible components (e.g., less than 20 kHz, such as less than 15 kHz). In some embodiments, the audio wave includes ultrasonic components (e.g., exceeding 20 kHz). In some embodiments, the audio wave can be selected or sequenced between various frequencies.

The STB 308 can output the audio wave to a speaker thereof (e.g., any speaker coupled therewith). The output can pass over one more communications links, such as the first communications link 316 or the third communications link 342 depicted in FIG. 1. Subsequent to its transmission, the audio wave can propagate from the speaker 340 to a microphone (e.g., the discrete microphone 344 or a microphone of the headset 314). In some embodiments, the STB can disable echo cancelation at least before the receipt of the audio wave to aid in the detection of the audio wave.

A STB can identify (and store) a time of a detection of the arrival of the audio wave upon the audio wave being received by the microphone 344. The arrival time can correspond to a time subsequent to the arrival of the audio wave at the transducer of the microphone 344, so as to account for processing time. The STB (or another device detecting the audio wave, such as another device at a same location or connected via a wide access network) can output a second instance of the audio wave (e.g., a retransmission of the audio wave as received, or a second transmission of a saved file, such as a same or different audio file). Such a second output can be generated upon the identification of the arrival time, in some embodiments. The STB can identify (and store) a time of a detection of the arrival of the audio wave upon the audio wave being received by the microphone 344. The STB can determine a communications latency based on the first and second identified times. For example, the latency can equal a difference between the identified times, or according to an offset therefrom (e.g., according to a known processing delay).

The STB can communicate the latency to a user interface, another device, or make an adjustment to other content based on the latency (e.g., upon determining the latency). For example, the communication of the latency can aid a user to adjust an audio-visual offset or to select a low-latency device (e.g., a device operating over a protocol that does not suffer from substantial interference/congestion). In some embodiments, the communication of the latency to another device or the (e.g., automatic) adjustment can synchronize audio-visual content as in the case of a video conference (including an ongoing or future video conference), synchronize different audio sources, or present the latency to a user through another user interface (e.g., the display). In some embodiments, the communication of the latency to another device implementing an audio call can aid in transmitting audio with low or synchronized latency, as in the case of a direct audio-only-call between users. For example, while gaming, gamers might want to add commentary or have a live audio-call with a friend playing a group/social game together. In such scenarios, provision of low-latency audio can aid in reducing lag between the video game and the audio channel.

In some embodiments, the STB can determine a configuration (e.g., via automated detection or user input), and associate the latency with the configuration. For example, the STB can determine that in a wired mode, a device incurs thirty-five milliseconds (ms) of latency, in a first wireless mode, the device incurs sixty-five ms of latency, and in a second wireless mode, the device incurs sixty ms of latency. The STB can select between various potential configurations based on the latency (e.g., according to a lowest latency), synchronize content to a previously determined latency, or present the various latency values via the user interface (e.g., to aid a user in the selection of a speaker 340, microphone 344, or another device).

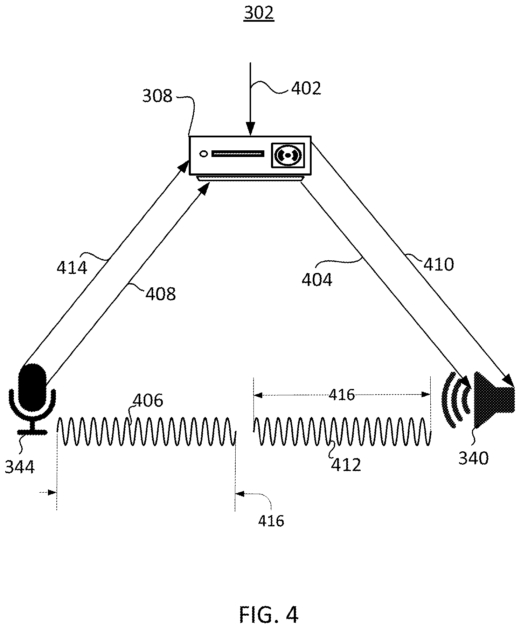

Referring now to FIG. 4, a network diagram of a system to measure audio latency of a device on a network (e.g., the first network 302 of FIG. 3) is provided, according to some embodiments. Particularly, the device is depicted according to an illustrative example of a set top box 308 coupled with a speaker 340 and a microphone 344 (e.g., a speaker 340 and a microphone 344 of a headset or a discrete speaker 340 and microphone 344). Such an illustrative example should not be construed as limiting; the device can be substituted for various other device(s) according to various embodiments contemplated by the present disclosure. For example, in some embodiments, the STB 308 may be substituted for a karaoke system including or interfacing with at least one microphone 344 and speaker 340.

Various communications of an audio wave are provided herein. These communications (and other communications of the present disclosure) may be realized by either of inter-device communications or intra-device communications. For example, in some embodiments, a STB 308 (or headset 314) can include an integral speaker 340 or microphone 344, such that communications between the integral components can be executed within a device (e.g., via a data bus, serial connection, or other intra-device link). In some embodiments, the communications can be between separate devices as in the case of a discrete speaker 340 or microphone 344. In various embodiments, any of the communications can be inter-device communications (e.g., between a separate STB 308, speaker 340, and microphone 344).

The STB 308 can receive an indication or command 402 to detect a latency. For example, the STB 308 can receive a command 402 to detect a latency which is local to the first network 302. The command 402 may be received incident to a periodic timer of the STB 308, a user command, a command received from or otherwise incident to an operation of a BQUICK_TOP server 1005, a pairing of a wireless device, or another trigger condition. Responsive to the receipt of the command 402, the STB 308 retrieves an audio wave. For example, the STB 308 can retrieve the audio wave from a predefined memory location (e.g., a local or other storage location), or receive the audio wave along with or incident to the receipt of the command 402 (e.g., as a digital encoding, such as a .mp3 or .wav file).

The STB 308 can play the audio wave via a speaker 340 of the STB 308. To play the audio wave, the STB 308 can provide a digital encoding or analog signal to the speaker 340. For example, the STB 308 can transform a first digital encoding of the audio wave to a second digital encoding, such as a resampling, conversion, or compression between a source file type and a target file type for the speaker (e.g., a Bluetooth audio profile or codec such as A2DP, AAC, aptX, or the like). In some embodiments, the STB 308 can include analog outputs or drive the speaker 340 directly, or via analog or digital amplifier circuits. In some embodiments, the STB 308 can communicate a digital encoding (e.g., .mp3), as received or retrieved from the memory location, to a "smart" speaker 340 including a decoder/decompressor/extractor to generate digital audio data (e.g., pulse code modulated data (PCM) data) and an analog-to-digital converter (ADC) to generate analog audio data for provision to a speaker-transducer. In any case, the provision of the audio wave to the speaker 340 can be referred to as either of a first communication 404 of the audio wave or "playing" the audio wave. The first communication can be associated with a latency, as may generally be expected to be relatively low for an analog communication over speaker wire and relatively high for a communication including various digital processing operations and packetizing of digital data.

The speaker 340 can play audio content (effecting a transduction of received voltages to mechanical motion for the pressure wave) to generate a second communication 406 (of a pressure wave) to a microphone 344. In some embodiments, the second communication is generated upon (e.g., responsive to) receiving the first communication. Such playing can include or omit any of the various transformations discussed with regard to the first communication 404, according to a particular STB 308 and speaker 340, along with the coupling therebetween and configuration thereof. The microphone 344 can return the audio wave to the source STB 308 via a third communication 408. The third communication can include detecting, by the STB 308, at least a portion of the played audio wave received by the microphone 344 of the STB 308. The STB 308 can identify a time of the played audio wave based on at least the portion of the played audio wave received by the microphone of the device being detected.

The third communication 408 can be realized according to various analog or digital formats, according to various embodiments. The STB 308 can identify a first time of detection of the received audio wave. For example, the first time can refer to a detection of a receipt of the third communication 408 at the set top box 308. In some embodiments, the first time can refer to another time, such as a receipt of the audio wave at the microphone 344 itself. Such an implementation can be achieved according to a timestamp provided by a "smart" microphone 344, or a predefined offset between the receipt of the second communication 406 and the receipt of the third communication 408 (e.g., a known latency therebetween). The STB 308 can store the first time in a register, transitive memory, or non-transitive memory. In some embodiments, the STB 308 can communicate the first time to a BQUICK_TOP server 1005.

The STB 308 can provide an audio wave to the speaker 340 via a fourth communication 410, playing the audio wave. In some embodiments, the STB 308 can conduct the fourth communication 410 responsive to and upon detection of the third communication 408. Such a communication can be provided incident to other audio data transmitted (e.g., along with other background noise of a room). Such an implementation can cause the audio wave to be communicated according to a same data flow as other traffic of a conference call or other audio application (e.g., as may be referred to as transparent to an application). In some embodiments, the STB 308 can conduct the fourth communication 410 after a predefined offset from the detection of such an implementation to reduce jitter or other variability in transmission time, such as where the STB 308 is configured to clear other caches and process the fourth communication 410 according to a high priority.

The audio wave provided at the fourth communication 410 can be another instance of the same audio wave (e.g., a second provision of a same digital or analog information) or can include a different audio file. A reference to the audio wave received incident to the third communication 408 is not intended to limit the fourth communication 410 to play the audio as received by the microphone 344 (e.g., including distortion or interference from a transmission medium); such a reference may also refer to re-playing the same audio wave (or another instance, such as a frequency-shifted instance). For example, in some embodiments, the second audio wave may be provided as the first audio wave was received. In some embodiments, the second audio wave may be provided according to a different predefined pattern to indicate that upon reception, a second time should be recorded. Such an indication may be useful to, for example, distinguish between proximal devices in a congested space. Incident to a receipt of the fourth communication 410, the speaker 340 can generate a fifth communication 412 (of a pressure wave) to the microphone 344 as described above with regard to the second communication 406.

The microphone can receive the fifth communication 412 (of the pressure wave) and transduce a signal for provision to the STB 308, as is provided according to a sixth communication 414. Upon a receipt of the sixth communication 414, the STB 308 can identify a second time according to the techniques referred to with regard to the first time. For example, the STB 308 can detect at least a portion of the second played audio wave received by the microphone. Further, the STB 308 can identify the second time of the played audio wave at the second time of the at least the portion of the played audio wave received by the microphone of the device being detected.

In some embodiments, a stored audio wave duration 316 is less than a round trip delay of the waveform, which may be referred to as a short duration waveform (e.g., a 10 ms duration waveform). In some embodiments, the STB 308 is configured to add a delay to maintain a sequence of events (e.g., based on the short-duration waveform). For example, the STB 308 can impose a delay subsequent to providing the first communication 404 and prior to the provision of the fifth communication 412 (e.g., prior to providing the fifth communication 410). Such a delay can aid or ensure that the STB 308 provides the fifth communication 410 subsequent to a detection of the fourth communication 408, in some embodiments.

The STB 308 can determine a latency of communications based on the first time and the second time. For example, the STB 308 can determine a difference between the first time and the second time to determine the latency. In some embodiments, the difference may represent the determined latency. In some embodiments, the STB 308 can perform further operations to determine the latency using the difference. For example, where the STB 308 is configured to conduct the fourth communication 410 after the predefined offset, the STB can subtract the pre-defined offset to determine a latency. Thus, the latency can describe a total transmission time for: (1) communication from the STB 308 to a speaker 340 (e.g., via the first communications link 316 or third communications link 342 of FIG. 3), (2) the transmission of an audio wave from the speaker 340 to a microphone 344, (3) communication from the microphone 344 to a STB 308 (e.g., via the first communications link 316 or fourth communications link 346 of FIG. 3), and (4) processing time of the STB 308 other components incident to the various above-mentioned communications.

To provide a more particular example, a latency of one hundred ms may be detected. Such a latency may be disaggregated into its various components. For example, the latency can include sixty ms of latency from the fourth communication 410 to the fifth communication 412 (as may be associated with a Bluetooth link from the STB 308 to the speaker 340); five ms audio propagation and transaction time from the fifth communication 412 to the sixth communication 414, and thirty-five ms processing time for the STB 308 to detect the sixth communication 414 to identify the second time. In some embodiment, the STB 308 is configured to disaggregate the various component of the total latency. For example, the STB 308 can store a predefined value or range for a processing time, or can include an integral speaker 340 or microphone 344 to distinguish from a communications link to the depicted speaker 340 or microphone 344 (e.g., both microphones 344 can receive the pressure wave, whereupon the STB can detect separate first and second times therefor).

In some embodiments, the STB 308 is configured to identify a configuration (e.g., STB configuration, microphone configuration, or speaker configuration) and associate the determined latency with the configuration. For example, the STB 308 can associate a first total latency of one hundred ms with a STB 308 configuration of a Bluetooth connected speaker 340 and wired microphone 344; a second total latency of one-hundred and twenty ms with a STB 308 configuration of a Bluetooth connected speaker 340 and Bluetooth connected microphone 344; and a third total latency of seventy-five ms with a STB 308 configuration of a wired headset including the speaker 340 and microphone 344. The STB 308 can accumulate further configurations according to different connected devices, same devices connected according to different protocols, power levels, or other configuration options. For example, the STB can receive further configurations employing a low latency (LL) Bluetooth link such as aptX-LL, a Wi-Fi link, and so forth to determine changes in latency. Such changes may relate to the actual communications times as well as processing times at the STB 308. For example, Bluetooth and Wi-Fi drivers/stacks may be associated with different latencies and older and newer versions of an operating system may be associated with different latencies. The STB 308 can determine a change in latency between devices or an individual component of latency according to a comparison of a different total latency between configurations, or by accounting for known latencies (e.g., subtracting known processing times or propagations times related to speaker positions as may be received by a user interface).

In some embodiments, the STB 308 communicates the aggregate latency or components thereof to a user interface such as the displays 310, 332 of FIG. 3. In some embodiments, the STB 308 communicates the latency to another device (e.g., a display to synchronize video and audio content, or a Bluetooth headset to select a lower (e.g., lowest) latency configuration). In some embodiments, the STB 308 communicates the aggregate latency or components thereof to a BQUICK_TOP server 1005 which may, in turn, manage device operation based thereof.

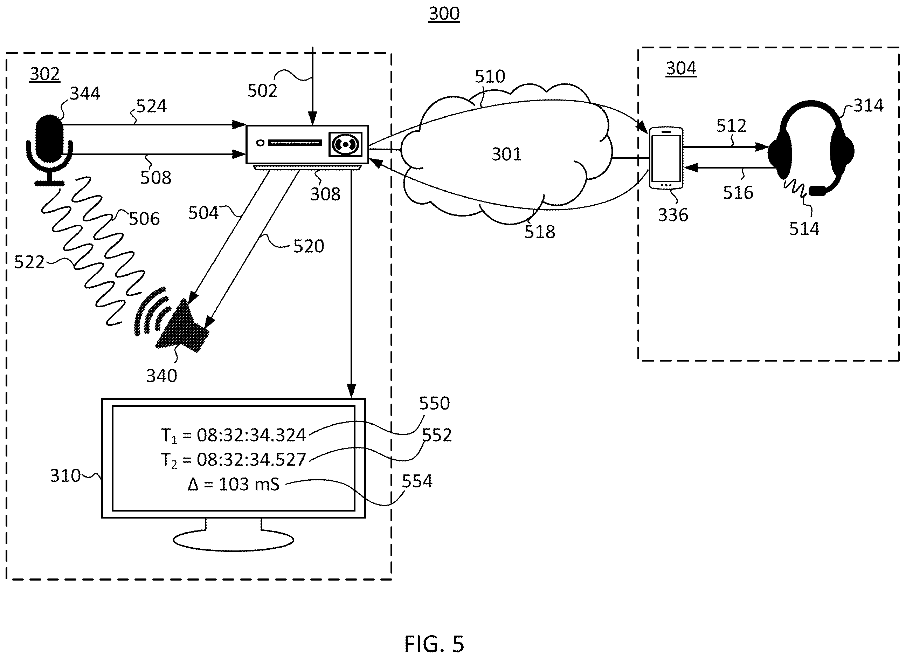

Referring now to FIG. 5, a network diagram of a system to measure audio latency between devices of different networks (e.g., the first network 302 and second network 304 of FIG. 3) is provided, according to some embodiments. A first device is depicted according to an illustrative example of a set top box 308; a second device is depicted according to an illustrative example of a mobile device 336. The first device and second device can each couple with a respective speaker 340 and a microphone 344, such as a speaker 340 and a microphone 344 of a headset 314 or a discrete speaker 340 and microphone 344. The first and second devices depicted as the STB 308 and mobile device 336 can instantiate a video conference including an audio component and a video component. Such a video conference can be referred to as provided from the STB 308 with the mobile device 336 or provided from the mobile device 336 with the STB 308, regardless of which device initiates the video conference. In some embodiments, the video conference can be instantiated by or in conjunction with a BQUICK_TOP server 1005, which may manage communications between the respective devices.

At least one of the devices (e.g., the STB 308) can receive an indication or command 502 to detect a latency. For example, the STB 308 can receive a command 502 to detect a latency relating to communication between respective devices of the respective networks 302, 304. The command 502 may be received incident to a periodic timer, a user command, a pairing of a wireless device, or another trigger condition. For example, the command may be generated locally or incident to communication with a server 306, such as the BQUICK_TOP server 1005. As part of the video conference, the STB 308 can communicate an audio wave via a speaker 340, according to a first communication 504 and second communication 506 which may be conducted according to description of the first communication 404 and second communication 406 depicted in FIG. 4. Subsequent to playing the audio wave, the STB 308 can identify a first time of the played audio wave being detected as being received by the microphone 344. That is, the STB 308 can detect a third communication 508 of the audio wave to the STB 308 as provided incident to a receipt, by the microphone, of the second communication 506. The third communication 508 and the STBs 308 detection thereof can be conducted according to any of the various embodiments described with regard to the third communication 408 of FIG. 4, to include the STBs 308 identification and storage of the first time.

Upon a receipt of the third communication 508 (and identifying the first time), rather than providing a communication to the speaker 340, as for the fourth communication 410 of FIG. 4, a fourth communication 510 is provided to another device, such another STB or, as depicted, a mobile device 336 of the second network 304. Accordingly, the fourth communication 510 can traverse a network fabric 301 which can include a local or wide area network (e.g., the Internet). A latency of the network fabric 301 may be unknown or time-variant such that the various communications of the present method may be repeated at regular interval, or upon a triggering event such as the initiation of a video conference, or as otherwise directed according to server 306 (e.g., a BQUICK server).

The mobile device 336 can, upon a receipt of the fourth communication 510 play, via a speaker 340 of the second network 304, the audio wave received from the first device during the video conference. For example, the mobile device 336 can play the audio wave to cause a fifth communication 512 to the speaker 340 and a sixth communication 514 to a microphone 344 (e.g., as described with regard to the respective first communication 404, 504 and second communication 406, 506 of FIGs. 4 or 5). The speaker 340 and microphone 344 of the mobile device 336 can include an integral speaker 340 or microphone 344, a discrete speaker 340 or microphone 344, or, as is depicted, a headset 314 having a speaker 340 and microphone 344 integral thereto. The microphone 344 can provide, upon receipt of the sixth communication 514, a seventh communication 516 to the mobile device 336. The mobile device 336 may or may not detect the seventh communication 516 but can, in either case, pass the received audio wave to the STB 308 of the first network 302. For example, the mobile device 336 can provide the audio wave as included in other audio content of the video conference, over the network fabric 301. Such a communication may be referred to as an eighth communication 518.

The STB 308 can receive the audio wave upon receipt of the eighth communication 518 (e.g., as played via the speaker 340 of the second network 304). However, the STB 308 need not detect the presence of the audio wave in the eighth communication 518. For example, the eighth communication 518 (like the fourth communication 510) can be provided according to streaming audio of the videoconference. The STB 308 can play the audio stream (or other format including the received audio wave as played by the speaker 340 of the second network 304) by causing a ninth communication 520 of the audio wave to a speaker 340 of the first network 302 to cause a corresponding tenth communication 522 of a pressure wave. The microphone 344 can receive the tenth communication 522 and provide a corresponding eleventh communication 524 to the STB 308, whereupon the STB 308 can detect the audio wave (e.g., sine-wave or other particular pattern or particular length, as provided above). That is, the audio wave can be received as played from the speaker 340 of the second network 304 as received by the microphone 344 of the mobile device 336 (e.g., by way of the sixth communication 514 though tenth communication 522). Accordingly, the STB 308 can detect at least a portion of the audio wave received by the microphone 344 of the STB 308 from the first speaker 340 of the STB 308 and the speaker 340 of the mobile device 336.

The STB 308 can identify the first time and second time of the received audio-wave based on at least the portion of the audio wave received by the first device being detected. More particularly, the STB 308 can identify a time of receipt of the audio wave (e.g., a receipt of the tenth communication 522 or eleventh communication 524), which may be referred to as a second time, as compared to the first time prior to the communication of the audio wave over the network fabric 301. The STB 308 can determine a communications latency between the first device and the second device based on the first time and the second time (e.g., a difference therebetween). For example, the difference between the first time and the second time can include (1) a communications latency within the first network 302 (e.g., the latency corresponding to the round-trip communication depicted in FIG. 4); (2) a round-trip latency over the network fabric 301; and (3) a communications latency within the second network 304.

In some embodiments, based on the full path latency, the STB 308 can determine components thereof. For example, a STB 308 can determine a local latency of the first network 302 (e.g., as described with respect to FIG. 4) and determine a cross-network latency to disaggregate the communications latency within the first network 302 from an aggregate latency. In some embodiments, the STB 308 can receive an indication of a latency of the second network (e.g., the mobile device 336 can determine a local latency of the second network 304 and provide an indication thereof to the STB 308). In some embodiments the STB 308 can communicate determined latencies or identified times to a server 306 (e.g., the BQUICK server). In some embodiments, any of the STB 308, the mobile device 336, or the server 306 can communicate a transmission timestamp for communications over the network fabric 301. Such timestamps can be provided according to a communications protocol (e.g., Ethernet precision time protocol), or may be implemented at an application level. Similarly, where each of the STB 308 and mobile device 336 are in network communication with a BQUICK_TOP server 1005, the BQUICK server can manage latency.

Upon determining the latency (e.g., aggregate latency or any component thereof), the STB 308 (or the mobile device 336) can communicate the determined latency to a user interface (e.g., the display 310) or provide an adjustment to another device based on the latency. For example, the STB 308 can communicate the latency to the mobile device 336. The mobile device 336 can, in turn, use the latency to synchronize audio content and video content or present the latency via a screen of the mobile device 336 or another instance of a user interface. In some instances, the STB 308 and mobile device 336 can each execute the various communications of provided in FIGs. 4 and 5, and mutually exchange any determined latency information, such that either of the STB 308 or the mobile device 336 can determine further components of the latency based on the mutually exchanged information.

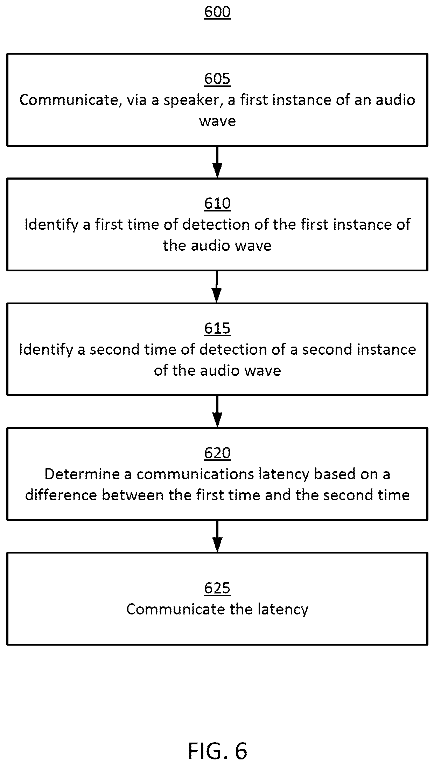

Referring now to FIG. 6, a flow diagram of a method 600 for measuring audio latency is provided, according to some embodiments. The method 600 may be performed by at least one device (sometimes referred to as a first device) having a speaker 340 and a microphone 344. The speaker 340 and microphone 344 of the device may be integral to or otherwise coupled with the device or with each other, as in the case of a headset 314. In some embodiments, a device (e.g., the first device) contemplated by the present disclosure may not include, but is configured to couple with, at least one of the speaker 340 or the microphone 344. One or more of operations 605, 610, 615, 620, or 625 may be performed by a STB 308 or other device. In some embodiments, the method 600 is performed in conjunction with a second device (e.g., a device of a second network 304, also having a microphone 344 and speaker 340). Further, the method 600 may be performed in conjunction with operations of further devices, such as the BQUICK_TOP server 1005 or other latency management devices.

The operations provided hereinafter are not intended to be limiting. According to various embodiments, the method 600 can add, substitute, modify or omit one or more operations according to the various aspects of the present disclosure, or otherwise. For example, in some embodiments, the method 600 can include providing a video conference between the first device and a second device, while in some embodiments, the method may omit such an operation or modify the operation (e.g., to include a provision of an audio-visual link with a remote server 306 to provide a video game audiovisual display or other audio-visual content, or provide live audio communication according to a lowest audio latency to improve a user experience). In some embodiments, the method 600 can include checking for detection of an audio wave and adjusting the audio wave responsive to a detection or nondetection (e.g., attempt to use ultrasonic or infrasonic frequencies, and adjust upon nondetection, as in the case of a microphone 344, speaker 344, or compression algorithm which does not communicate the selected frequencies).

At operation 605, the first device communicates (e.g., plays) a first instance of an audio wave via a speaker 340. In some embodiments, the audio wave may correspond to video content such as a content of a video game or a video conference.

At operation 610, the first device identifies a time of detection of the audio wave. For example, the time of detection can correspond to the detection of the audio wave as received by the microphone and provided to the first device. Subsequent to the detection, the first device can further communicate the audio wave. For example, the communication can refer to playing the audio wave via the same speaker 340 referred to with regard to operation 605, or transmitting the audio wave, across a network fabric 301, to a second device.

At operation 615, the first device detects a time of another instance of the audio wave. For example, according to some executions of the method 600, the first device detects a second playing of the audio wave by the speaker 340 of operation 605 (as received by the microphone 344). According to some executions of the method 600, the first device detects a playing of the audio wave by a speaker 340 of a second device in communication with the first device via a network fabric 301. For example, the second device can receive an audio-visual stream including the audio wave, play the audio portion of the stream via a speaker, and receive (e.g., detect or pass-through) the audio wave played by the speaker 340 of the second device. Thereafter, the second device can return the stream to the first device for provision, via a speaker 340 of the first device, to a microphone 344 of the first device to deliver the audio wave to the first device. Upon such a delivery, the first device can identify a second time associated with the detection of the further instance of the audio wave.

At operation 620, the first device determines a latency of communications. For example, in some embodiments, the first device can determine a local latency of communication (with or between the microphone 344 or speakers 340). In some embodiments, the first device can determine a local latency of communication with a second device, disposed across a network fabric 301. The determination of latency may be based on a difference between the first time and the second time. For example, in some embodiments, an aggregate latency may be defined according to the difference between the first time and the second time, and portions of the of the aggregate latency may be derived therefrom.

At operation 625, the first device can communicate the determined latency. For example, the first device can communicate the determined latency via a user interface, or another device. The other device can include a device local to a same network such as a speaker 340 or microphones 344 (e.g., to implement an offset between audio content and other content, such as video content of a video conference or a video game). The other device can include the second device or a server 306 such as a B_QUICK_TOP server 1005 to manage latency between any of various devices or networks.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure may reference terms such as "first" and "second" in connection with devices, mode of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected includes indirect and direct couplings and connections.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs or executable instructions embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs or executable instructions may be stored on or in one or more articles of manufacture as object code.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure. The headings provided in this document are non-limiting.

The applications and servers have been described above with the aid of functional building blocks illustrating the performance of certain significant functions. The boundaries of these functional building blocks have been arbitrarily defined for convenience of description. Functions and structures can be integrated together across such boundaries. Alternate boundaries could be defined as long as the certain significant functions are appropriately performed. Similarly, flow diagram blocks may also have been arbitrarily defined herein to illustrate certain significant functionality. To the extent used, the flow boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. A device configured to:
play, via a speaker (340) of the device, an audio wave stored in storage accessible by the device;
detect the played audio wave as being received by a microphone (344) of the device, the device to identify a first time of the played audio wave being detected;
play, via the speaker (340), the played audio wave received by the microphone (344);
detect the second played audio wave as being received by the microphone (344), the device to identify a second time of the second played audio wave being detected;
determine, a latency of communications of the device based at least on a difference between the first time of the played audio wave being detected and the second time of the second played audio wave being detected; and
communicate the latency to one of a second device or a user interface (310, 332).

2. The device of claim 1, wherein the device is a set top box.

3. The device of claim 1 or 2, wherein the device is configured to:
insert a delay between playing the audio wave and playing the played audio wave, wherein:
the audio wave comprises a sine-wave of a specific length of time with a specific pattern;
the latency exceeds the specific length of time; and
the determination of the latency comprises reducing a detected latency by a period of the delay.

4. The device of any of claims 1 to 3, wherein the device is further configured to:
detect at least a portion of the played audio wave received by the microphone (344) of the device.

5. The device of claim 4, wherein the device is further configured to:
identify the first time of the played audio wave based on at least the portion of the played audio wave received by the microphone (344) of the device being detected.

6. The device of any of claims 1 to 5, wherein the device is further configured to:
detect at least a portion of the second played audio wave received by the microphone (344) of the device.

7. The device of any of claims 4 to 6, wherein the device is further configured to:
identify the second time of the played audio wave at the second time of the at least the portion of the played audio wave received by the microphone (344) of the device being detected.

8. The device of any of claims 1 to 7, wherein the device is further configured to:
identify a configuration of the device and associate the determined latency with the configuration.

9. The device of any of claims 1 to 8, wherein the device is further configured to:
disable echo cancellation at least prior to playing the audio wave.

10. A method comprising:
providing, by a first device, a video conference with a second device;
communicating, by the first device, an audio wave as part of the video conference, the audio wave being played via a first speaker (340) of the first device;
identifying, by the first device, a first time of the played audio wave being detected by the first device as being received by a microphone (344) of the first device;
detecting, by the first device, the audio wave being played during the video conference via a second speaker of the second device and received by the microphone (344) of the first device;
identifying, by the first device, a second time of the audio wave being detected by the first device and received by the microphone (344) of the first device;
determining, by the first device, a latency of communications between the first device and the second device based at least on a difference of the first time of the audio wave being detected and the second time of the audio wave being detected; and
communicating, by the first device, the latency to one of the second device or a user interface (310, 332) of the first device.

11. The method of claim 10, comprising at least one of the following features:
further comprising playing, by the second device, via the second speaker, the audio wave received from the first device during the video conference;
wherein the audio wave comprises a sine-wave of a specific length of time with a specific pattern.

12. The method of claim 10 or 11, further comprising detecting, by the first device, at least a portion of the audio wave received by the microphone (344) of the first device from the first speaker (340) of the first device and the second speaker of the second device;
in particular further comprising identifying, by the first device, the first time and the second time of the received audio wave based on at least the portion of the audio wave received by the first device being detected.

13. The method of any of claims 10 to 12, further comprising identifying, by the first device, a configuration of one of the first device or the second device and associating the latency with the configuration.

14. A system comprising:
one or more processors of a first device configured to:
output, to a first speaker (340) of the first device, an audio wave retrieved from a storage location;
identify a first time of the audio wave being received by a microphone (344) of the first device and detected by the first device;
identify a second time of the audio wave being received by the microphone (344) of the first device and detected by the first device, the audio wave being outputted a second time by the first device to the first speaker (340), or by a second device to a second speaker;
determine a latency of communications from at least the first device based at least on a difference of the first time of the audio wave being identified and the second time of the audio wave being identified; and
communicate the latency to one of the second device or a user interface (310, 332).

15. The system of claim 14, comprising at least one of the following features:
wherein the one or more processors of the first device are further configured to:
provide a video conference with the second device and output the audio wave during the video conference;
wherein the one or more processors of the first device are further configured to:
determine the latency of communications between the first device and the second device based at least on the difference between the first time and the second time;
wherein the audio wave comprises a sine-wave of a specific length of time with a specific pattern;
wherein the one or more processors of the first device are further configured to determine a configuration of at least the first device and associate the configuration with the determined latency.
